# EUROPÄISCHE PATENTSCHRIFT

(11) **EP 3 127 837 B1**
(45) Veröffentlichungstag und Bekanntmachung des Hinweises auf die Patenterteilung: **07.06.2023**
(21) Anmeldenummer: 16179797.2
(22) Anmeldetag: 15.07.2016
(51) Int. Cl.: B65G 1/04, B42D 3/00, B65H 3/00, B65G 1/06, B65H 31/30, B65H 1/28, B65H 3/08, B65H 5/00, B65H 5/10, B42C 19/00

(54) **LAGER- UND HERSTELLUNGSSYSTEM ZUM HERSTELLEN VON BÜCHERN**
STORAGE AND MANUFACTURING SYSTEM FOR MANUFACTURING BOOKS
SYSTEME DE STOCKAGE ET DE FABRICATION DE LIVRES

(30) Priorität: 17.07.2015 DE 102015213543
(43) Veröffentlichungstag der Anmeldung: 08.02.2017
(73) Patentinhaber: CEWE Stiftung & Co. KGaA, 26133 Oldenburg (DE)
(72) Erfinder: Torzewski, Erik, 23689 Luschendorf (DE)
(74) Vertreter: Eisenführ Speiser

(56) Entgegenhaltungen:
- WO-A1-2005/007541
- DE-A1-102006 025 620
- DE-A1-102009 032 406
- DE-A1-102011 106 667
- FR-A1- 3 014 858
- GB-A- 2 264 293
- JP-A- 2004 168 469
- JP-A- 2005 119 787
- JP-A- 2006 225 089
- JP-U- S5 968 707
- JP-U- S57 199 211
- US-A- 5 125 782
- US-A1- 2010 012 608
- US-A1- 2013 129 455
- Gudehus T.: "Logistik 2", , 1. Juni 2012 (2012-06-01), Seite 833, XP055326972, ISBN: 978-3-642-29376-4 Gefunden im Internet: URL:http://www.springer.com/de/book/978364 2293757 [gefunden am 2016-12-07]

## Beschreibung

Die Erfindung bezieht sich auf Regalsysteme zum Einlagern und Auslagern von Objekten. Die Objekte sind bevorzugt Buchdecken und/oder Stapel von Buchdecken. Zudem bezieht sich die Erfindung auf ein Lagersystem zum Lagern von Buchdecken und ein Herstellungssystem zum Herstellen von Büchern. Außerdem bezieht sich die Erfindung auf Verfahren zum Einlagern und Auslagern von Objekten, ein Förderverfahren zum Fördern von Buchdecken und ein Herstellungsverfahren zum Herstellen von Büchern. Die Erfindung bezieht sich auch auf Computerprogramme zum Steuern des Regalsystems, des Lagersystems und des Herstellungssystems.

Die deutsche Offenlegungsschrift DE 10 2011 106 667 A1 offenbart ein Regelsystem mit einem Regalblock, der eine Einlagerungsseite und eine Auslagerungsseite aufweist, wobei zwischen der Einlagerungsseite und der Auslagerungsseite Kanäle mit Fördermitteln wie Rollen, Bänder, Riemen, Ketten, et cetera angeordnet sind, um eingelagerte Objekte von der Einlagerungsseite zu der Auslagerungsseite zu bewegen, wobei für die Einlagerung eine Einlagerungsmaschine und für die Auslagerung eine Auslagerungsmaschine verwendet wird. Die deutsche Offenlegungsschrift DE 10 2006 025 620 A1 offenbart ein Regalsystem nach dem Oberbegriff des Anspruchs 1.

Regalsysteme weisen häufig ein Regalbediengerät zum Einlagern und Auslagern der zu lagernden Objekte auf. Beim Einlagern nimmt das Regalbediengerät das einzulagernde Objekt an einer Ausgangsposition auf, bewegt das Objekt zu einem Lagerort in dem Regalsystem und legt es dort ab. Beim Auslagern nimmt das Regalbediengerät das auszulagernde Objekt an dem Lagerort auf, bewegt es zu einem Abgabeort und gibt es dort beispielsweise an ein Fördersystem ab. Diese Prozesse des Ein- und Auslagerns mit dem Regalbediengerät können relativ lange dauern.

Wenn dieses Regalsystem zum Einlagern und Auslagern von Objekten verwendet wird, die im Rahmen eines Herstellungsprozesses benötigt werden, können diese relativ langen Ein- und Auslagerungsprozesse zu unnötigen Wartezeiten und Verzögerungen bei dem Herstellungsprozess führen.

Es ist eine Aufgabe der vorliegenden Erfindung, ein Regalsystem zum Lagern von Objekten, insbesondere von einzelnen Buchdecken, und ein Verfahren und ein Computerprogramm zum Einlagern der Objekte in das Regalsystem und zum Auslagern der Objekte aus dem Regalsystem bereitzustellen, die einen schnelleren Herstellungsprozess, insbesondere zum Herstellen von Fotobüchern, ermöglichen. Es ist eine weitere Aufgabe der Erfindung, ein Lagersystem zum Lagern von Buchdecken und ein Herstellungssystem zum Herstellen von Büchern bereitzustellen. Es ist zudem eine Aufgabe der vorliegenden Erfindung, Verfahren zum Einlagern von Objekten, insbesondere von einzelnen Buchdecken oder von Stapeln von Buchdecken, und zum Auslagern der Objekte, ein Förderverfahren zum Fördern von Buchdecken und ein Herstellungsverfahren zum Herstellen von Büchern bereitzustellen. Es ist außerdem eine Aufgabe der vorliegenden Erfindung, Computerprogramme zum Steuern des Regalsystems, des Lagersystems und des Herstellungssystems vorzusehen.

Gemäß einem ersten Aspekt der Erfindung ist daher ein Regalsystem zum Lagern von Objekten, insbesondere von einzelnen Buchdecken, nach Anspruch 1 vorgesehen. Da das Einlagern mittels des ersten Regalnutzungsgeräts über die Einlagerungsseite und das Auslagern mittels des zweiten Regalnutzungsgeräts über die Auslagerungsseite erfolgt, können das automatische Einlagern und das automatische Auslagern entkoppelt werden. Dies ermöglicht schnellere Einlagerungs- und Auslagerungsprozesse und damit auch schnellere Herstellungsprozesse, wenn die ein- und ausgelagerten Objekte für den Herstellungsprozess benötigt werden.

Das Regalnutzungsgerät ist ein Gerät, das ein Einlagern und/oder ein Auslagern von Objekten ermöglicht. Es ist insbesondere ein Gerät, das ein Objekt aufnehmen kann, transportieren und abgeben kann, beispielsweise um es in die Regaleinheit ein- und/oder auszulagern. Das Regalnutzungsgerät kann beispielsweise ein Regalbediengerät oder ein anderes Gerät zum Ein- und/oder Auslagern von Objekten in eine Regaleinheit sein. Das erste Regalnutzungsgerät und das zweite Regalnutzungsgerät sind bevorzugt unabhängig voneinander betreibbar.

Das Regalsystem ist bevorzugt angepasst, als Objekte einzelne Buchdecken ein- und auszulagern. Buchdecken, die auch als Cover bezeichnet werden können, werden zusammen mit Buchinhalten, das heißt zusammen mit Buchblöcken, verwendet, um Bücher, insbesondere Fotobücher, herzustellen. Das Regalsystem ist insbesondere angepasst, Objekte, die unterschiedliche Abmessungen aufweisen, ein- und auszulagern.

Das erste Regalnutzungsgerät weist bevorzugt eine Ausgangsposition bezüglich der Regaleinheit auf und ist bevorzugt angepasst, Objekte in der Ausgangsposition aufzunehmen und in die Regaleinheit so an Lagerorten einzulagern, dass Wegstrecken von der Ausgangsposition zu den Lagerorten und/oder Zeiten, die für die jeweilige Einlagerung benötigt werden, minimiert sind.

Erfindungsgemäß ist das erste Regalnutzungsgerät angepasst, die Objekte mit möglichst geringem Abstand zu der Ausgangsposition einzulagern. Das heißt beispielsweise, dass jeweils derjenige nicht belegte Lagerort aus einer Vielzahl von nicht belegten Lagerorten ausgewählt wird, der der Ausgangsposition, an der das jeweilige Objekt aufgenommen wird, am nächsten liegt. Das erste Regalnutzungsgerät kann auch ausgebildet sein, jeweils den nicht belegten Lagerort auszuwählen, der ausgehend von der Ausgangsposition, an der das jeweilige Objekt aufgenommen wird, am schnellsten zu erreichen ist. Unterschiede bezüglich des Kriteriums "kürzeste Wegstrecke" und des Kriteriums "schnellste Einlagerungszeit" können sich dadurch ergeben, dass das erste Regalnutzungsgerät in unterschiedlichen Richtungen unterschiedlich schnell bewegbar sein kann. Zudem kann das erste Regalnutzungsgerät derart angepasst sein, dass die Wegstrecke für das zweite Regalnutzungsgerät beim Auslagern des jeweiligen Objekts minimiert wird. Insbesondere kann das erste Regalnutzungsgerät derart ausgebildet sein, das die Einlagerung so erfolgt, dass die Gesamtwegstrecke, die das erste Regalnutzungsgerät zum Einlagern und das zweite Regalnutzungsgerät zum Auslagern benötigen, minimiert wird. Zudem kann das erste Regalnutzungsgerät so ausgebildet sein, dass die Auslagerungszeit oder die Gesamtzeit, die das erste Regalnutzungsgerät zum Einlagern und das zweite Regalnutzungsgerät zum Auslagern benötigen, minimiert wird.

Die Ausgangsposition des ersten Regalnutzungsgeräts, an der die Objekte aufgenommen werden, ist bevorzugt zentriert bezüglich der Lagerorte der Regaleinheit angeordnet. Diese Zentrierung kann a) eine rein horizontale Zentrierung, b) eine rein vertikale Zentrierung oder c) eine horizontale und vertikale Zentrierung sein. Die Zentrierung kann zu reduzierten Einlagerungswegstrecken und zu reduzierten Zeiten, die für die Einlagerung benötigt werden, führen. Auch eine Abgabeposition, an der das zweite Regalnutzungsgerät das jeweils ausgelagerte Objekt an beispielsweise ein Förderband abgibt, kann zentriert bezüglich der Lagerorte des Regalsystems angeordnet sein, wobei auch diese Zentrierung a) eine rein horizontale Zentrierung, b) eine rein vertikale Zentrierung oder c) eine horizontale und vertikale Zentrierung sein kann. Die Ausgangsposition des ersten Regalnutzungsgeräts, an der das erste Regalnutzungsgerät ein Objekt aufnimmt, und die Ausgangsposition des zweiten Regalnutzungsgeräts, an der das zweite Regalnutzungsgerät ein Objekt abgibt, können bezogen auf die Lagerorte des Regalsystems an den gleichen Stellen oder an unterschiedlichen Stellen angeordnet sein.

Das Regalsystem weist Regalböden auf, auf denen die Objekte gelagert werden. Die Lagerorte befinden sich demnach auf den Regalböden. Die Lagerorte auf einem Regalboden können durch Begrenzungselemente voneinander getrennt sein. Die Begrenzungselemente können einen Lagerort an zwei, drei oder vier Seiten begrenzen. Insbesondere können die Begrenzungselemente, die senkrechte Wände sein können, Fächer bilden, in denen sich die Lagerorte befinden. Ein Lagerort kann aber auch nicht durch ein Begrenzungselement abgrenzt sein, so dass Lagerorte auf einem Regalboden definiert sein können, ohne dass diese durch Begrenzungselemente voneinander getrennt sind.

Vorzugsweise weisen die Regalböden zumindest ein Begrenzungselement auf der Auslagerungsseite des Regalsystems auf. Dieses Begrenzungselement kann als Anschlag aufgefasst werden, bis zu dem das erste Regalnutzungsgerät die Objekte beim Einlagern bewegen kann. Dieser Anschlag kann dazu führen, dass alle im Regalsystem befindlichen Objekte in Auslagerungsrichtung dieselbe Position aufweisen, selbst wenn die Objekte unterschiedliche Abmessungen haben. Das zweite Regalnutzungsgerät kann angepasst sein, die Objekte beim Auslagern über den Anschlag anzuheben. Der Anschlag kann unterbrochen sein, das heißt auf dem jeweiligen Regalboden entlang der Auslagerungsseite nicht durchgängig verlaufen, um ein Auslagern mittels des zweiten Regalnutzungsgerätes zu erleichtern. Erfindungsgemäß weisen die Regalböden keinen Anschlag auf der Auslagerungsseite des Regalsystems auf.

Das erste Regalnutzungsgerät ist dann angepasst, die Objekte so in die Regaleinheit einzulagern, dass die im Regalsystem befindlichen Objekte in Auslagerungsrichtung dieselbe Position aufweisen, selbst wenn die Objekte unterschiedliche Abmessungen haben. Das erste Regalnutzungsgerät kann also angepasst sein, die Wegstrecke, die das jeweilige Objekt in die Regaleinheit bewegt wird, in Abhängigkeit von der Größe des Objektes in Auslagerungsrichtung zu wählen, so dass alle eingelagerten Objekte in Auslagerungsrichtung dieselbe Position aufweisen. Ein Objekt, das in Auslagerungsrichtung eine größere Länge ausweist, kann daher weniger weit in die Regaleinheit bewegt werden als ein anderes Objekt, das eine kürzere Länge in Auslagerungsrichtung aufweist.

Vorzugsweise ist der jeweilige Regalboden nicht komplett geschlossen, sondern weist Öffnungen auf. Beispielsweise kann ein Regalboden durch Planken, Finger, Bretter, Zinken oder auf andere Weise mit Zwischenräumen ausgebildet sein. Diese Öffnungen im Regalboden können ein Ein- und Auslagern durch das erste und zweite Regalnutzungsgerät erleichtern. Anstelle von oder zusätzlich zu den Öffnungen kann der jeweilige Regalboden auch Vertiefungen aufweisen, die ein Ein- und Auslagern durch das erste und zweite Regalnutzungsgerät erleichtern können.

Die Regaleinheit ist so ausgebildet, dass sie die Objekte nicht bewegt. Die Objekte werden mittels des ersten Regalnutzungsgeräts eingelagert und mittels des zweiten Regalnutzungsgeräts ausgelagert, wobei eine weitere Bewegung der Objekte innerhalb der Regaleinheit nicht stattfindet. Insbesondere sind die Regalböden ortsfest. Das heißt, die Regalböden bewegen sich nicht, beispielsweise um ein Objekt zu einem anderen Ort zu bewegen. So werden die Regalböden beispielsweise nicht durch Förderbänder gebildet und weisen bevorzugt keine Rollen auf.

Vorzugsweise sind Lagerbereiche an den unterschiedlichen Lagerorten, beispielsweise die entsprechenden Fächer, gleich groß und die räumliche Verteilung der Lagerorte ist konstant. In einer anderen Ausführungsform kann die Verteilung der Lagerorte veränderbar sein. Auch die Größe der jeweiligen Lagerbereiche kann veränderbar sein. Zudem können selbst dann, wenn die Lagerbereiche eine konstante Größe ausweisen, Lagerbereiche, die unterschiedlichen Lagerorten zugeordnet sind, unterschiedliche Größen aufweisen. Eine dynamische Änderung von Lagerorten, das heißt der räumlichen Verteilung der Lagerorte, und/oder von Größen von Lagerbereichen, die den Lagerorten zugeordnet sind, kann in Abhängigkeit von der Menge einzulagernder Objekte und/oder der Größe der einzulagernden Objekte erfolgen.

Das Regalsystem umfasst bevorzugt des Weiteren eine Speichereinheit zum Speichern von Zuordnungsinformationen, die angeben, an welchen Lagerorten welche Objekte eingelagert sind. Es ist bevorzugt, dass das zweite Regalnutzungsgerät auf diese Speichereinheit zugreifen kann, so dass das zweite Regalnutzungsgerät das jeweils auszulagernde Objekt leicht finden und auslagern kann.

Die Objekte können jeweils ein Identifizierungselement zur eindeutigen Identifizierung des jeweiligen Objektes aufweisen. Das Identifizierungselement kann beispielsweise ein Barcode oder ein RFID-Element sein. Der Barcode kann beispielsweise ein eindimensionaler Barcode, ein zweidimensionaler Barcode oder ein farbiger Barcode sein. Das Regalsystem kann mindestens eine Identifizierungseinheit umfassen, die ausgebildet ist, das jeweilige Objekt unter Verwendung des jeweiligen Identifizierungselements zu identifizieren. Beispielsweise kann die Identifizierungseinheit angepasst sein, das jeweilige Objekt bei der Aufnahme durch das erste Regalnutzungsgerät und/oder bei der Abgabe durch das zweite Regalnutzungsgerät und/oder, wenn es in der Regaleinheit eingelagert ist, zu identifizieren. In einer bevorzugten Ausführungsform ist die Identifizierungseinheit angepasst, das Identifizierungselement des jeweiligen eingelagerten Objektes von der Auslagerungsseite aus zu identifizieren. Durch das Identifizieren des jeweiligen Objektes kann sichergestellt werden, dass bekannt ist, welches Objekt an welchem Lagerort eingelagert ist, wobei diese Zuordnungsinformation in der oben genannten Speichereinheit gespeichert werden kann.

Wenn die Identifizierungseinheit angepasst ist, das Identifizierungselement des jeweiligen eingelagerten Objektes von der Auslagerungsseite aus zu identifizieren, kann relativ leicht unmittelbar vor dem Auslagern noch einmal überprüft werden, ob das an dem jeweiligen Lagerort befindliche Objekt wirklich das erwartete Objekt ist, das aktuell auszulagern ist. Wenn dies nicht so ist, kann eine Fehlermeldung erzeugt und beispielsweise ein Identifizieren aller im Regalsystem befindlichen Objekte durchgeführt werden, um festzustellen, welche Objekte sich an welchen Lagerorten befinden, und um die Zuordnungsinformation zu aktualisieren.

Die Identifizierungseinheit kann an dem ersten und/oder dem zweiten Regalnutzungsgerät angebracht sein. Dies ermöglicht ein relativ leichtes Identifizieren der jeweiligen Objekte während des Einlagerungsprozesses und/oder während des Auslagerungsprozesses.

Das erste Regalnutzungsgerät und/oder das zweite Regalnutzungsgerät umfasst bevorzugt eine Objektaufnahmeeinrichtung zum Aufnehmen und Abgeben von Objekten, insbesondere von Buchdecken und/oder von Stapeln von Buchdecken, wobei die Objektaufnahmeeinrichtung eine Laufbandeinheit und eine Halteeinrichtung zum Halten der Laufbandeinheit aufweist, wobei die Objektaufnahmeeinrichtung so angepasst ist, dass die Laufbandeinheit zum Aufnehmen und/oder Abgeben eines Objekts aus der Halteeinrichtung heraus- und in die Halteeinrichtung hineinbewegbar ist. Zum Aufnehmen eines Objektes kann also zunächst die Laufbandeinheit teleskopartig aus der Halteeinrichtung heraus bewegt werden, insbesondere so dass die Laufbandeinheit das aufzunehmende Objekt berührt, wonach ein oder mehrere Transportbänder der Laufbandeinheit das Objekt auf die Laufbandeinheit bewegen können. Die Laufbandeinheit selbst zusammen mit dem auf der Laufbandeinheit lagernden Objekt kann dann wieder in die Halteeinrichtung hinein bewegt werden. Zum Abgeben des Objektes kann die Laufbandeinheit wieder aus der Halteeinrichtung heraus bewegt werden, wonach ein oder mehrere Transportbänder der Laufbandeinheit das Objekt von der Laufbandeinheit herunter zu einem Lagerort bewegen können. Die Objektaufnahmeeinrichtung kann natürlich auch angepasst sein, es zu ermöglichen, ein Objekt aufzunehmen und/oder abzugeben, indem nur ein oder mehrere Transportbänder verwendet werden, ohne dass die Laufbandeinheit aus der Halteeinrichtung heraus und/oder in die Halteeinrichtung hinein bewegt wird. Die Objektaufnahmeeinrichtung mit der teleskopartig bewegbaren Laufbandeinheit kann zu einem verbesserten, d.h. insbesondere für das aufzunehmende und/oder abzugebende Objekt schonendere, Umlagerung führen.

Die Objektaufnahmeeinrichtung könnte auch als Lastaufnahmemittel oder als Teleskop-Laufbandeinheit bezeichnet werden. Bevorzugt ist die Objektaufnahmeeinrichtung angepasst, einzelne Buchdecken und/oder Stapel von Buchdecken aufzunehmen und/oder abzugeben. In einer Ausführungsform ist die Objektaufnahmeeinrichtung angepasst, Objekte a) von einem Förderband und/oder von einer Regaleinheit aufzunehmen und/oder b) an ein Förderband und/oder an eine Regaleinheit abzugeben.

Bevorzugt umfasst die Laufbandeinheit eine Ausrichtungseinheit zum Ausrichten des Objekts auf der Laufbandeinheit. Insbesondere umfasst die Laufbandeinheit ein Transportlaufband zum Transportieren des Objekts und ein Ausrichtungstransportband mit einer vorstehenden Nase zum Ausrichten des Objekts auf dem Transportlaufband, wobei das Transportlaufband und das Ausrichtungslaufband unabhängig voneinander bewegbar sind. Die Ausrichtungseinheit weist demnach bevorzugt ein Ausrichtungslaufband mit einer vorstehenden Nase auf. Bevorzugt umfasst die Laufbandeinheit zwei oder mehr Transportbänder und/oder zwei oder mehr Ausrichtungslaufbänder. Die Ausrichtungseinheit ermöglicht eine gewünschte Ausrichtung des Objektes auf dem Transportlaufband und demnach auch an einem Lagerort, an dem das Objekt abgegeben wird. In einer Ausführungsform ist die Objektaufnahmeeinrichtung angepasst, zum Abgeben des Objekts dieses mittels der vorstehenden Nase von dem Transportlaufband zu schieben. Hierdurch kann die Ausrichtung des Objekts beim Auslagern weiter verbessert werden.

Die Laufbandeinheit kann angepasst sein, ein Objekt beispielsweise in eine Regaleinheit so einzulagern, dass alle eingelagerten Objekte auf der der Einlagerungsseite gegenüberliegenden Seite bündig angeordnet sind. Das heißt, die Wegstrecke, die das jeweilige Objekt beim Abgeben des Objektes von der Laufbandeinheit wegbewegt wird, kann von der Größe des jeweiligen Objektes in Bewegungsrichtung abhängen. Dies ermöglicht ein bündiges Anordnen der Objekte an Lagerorten, selbst wenn die Objekte unterschiedliche Größen aufweisen. Zum Bestimmen der Größe des jeweiligen Objektes zumindest in der Richtung, in die das jeweilige Objekt beim Abgeben an einem Lagerort bewegt wird, kann die Laufbandeinheit oder eine andere Einheit der Objektaufnahmeeinrichtung eine entsprechende Messeinheit aufweisen, die beispielsweise mittels einer Lichtschranke eine Länge des jeweiligen Objektes misst. Beispielweise kann das Objekt mit einer bekannten Geschwindigkeit durch die Lichtschranke bewegt werden, um die Länge des Objektes in Bewegungsrichtung zu bestimmen. Es ist auch möglich, dass die Identität des Objektes bereits bekannt ist, beispielsweise auf Grund eines Auslesens eines Identifikationscodes auf dem Objekt, wobei die Größe des Objektes in einer Datenbank gespeichert sein kann, so dass die Größe des Objektes in der jeweiligen Richtung von der Datenbank erhalten werden kann.

Das Regalsystem kann angepasst sein, die Objektaufnahmeeinrichtung so zu steuern und zu bewegen, dass zum Abgeben des Objekts an einem Lagerort das Objekt auf der herausbewegten Laufbandeinheit zunächst oberhalb des Lagerorts angeordnet ist, wonach die Objektaufnahmeeinrichtung zur Ablage des Objekts an dem Lagerort nach unten bewegt wird. Zudem kann das Regalsystem angepasst sein, die Objektaufnahmeeinrichtung so zu steuern, dass zum Aufnehmen des Objekts von einem Lagerort die herausbewegte Laufbandeinheit zunächst unterhalb des Lagerorts angeordnet ist, wonach die Objektaufnahmeeinrichtung zur Aufnahme des Objekts von dem Lagerort nach oben bewegt wird. Dies ermöglicht ein Ein- und/oder Auslagern der Objekte derart, dass kein Verschieben der Objekte innerhalb der Regaleinheit, insbesondere auf Regalböden, notwendig ist. Dies kann zu einer Reduzierung oder Vermeidung von Beschädigungen der gelagerten Objekte führen.

Die Regaleinheit ist länglich entlang einer Längsrichtung der Regaleinheit ausgebildet, wobei die Regaleinheit ein erstes Kopfende, ein gegenüberliegendes zweites Ende und zwischen diesen beiden Enden, parallel zur Längsrichtung Seiten aufweist, die a) länger sind als das Kopfende und das zweite Ende und b) die Einlagerungsseite und die Auslagerungsseite bilden. Diese Anordnung ermöglicht ein Auslagern eines Objekts, das gerade eingelagert worden ist, mit einem relativ geringen technischen Aufwand, da ein Lagerort sowohl von der Einlagerungsseite als auch von der Auslagerungsseite leicht unmittelbar erreichbar ist.

Gemäß einem weiteren Aspekt der vorliegenden Erfindung wird ein Lagersystem zum Fördern von Buchdecken bereitgestellt, wobei das Lagersystem ein Stapellager zum Lagern von Stapeln von Buchdecken, einen Entstapler zum Entstapeln der Stapel von Buchdecken und zum Abgeben einzelner Buchdecken, und ein Regalsystem nach einem der Ansprüche 1 bis 8 zum Lagern von einzelnen Buchdecken umfasst.

Das Stapellager, das auch als Stapelmanager bezeichnet werden könnte, kann ein weiteres Regalsystem mit einem Regalnutzungsgerät aufweisen, das die Stapel von Buchdecken sowohl einlagert als auch auslagert. Das Regalsystem kann eine Regaleinheit umfassen, das zum Lagern mehrerer Stapel von Buchdecken an Lagerorten ausgebildet ist und eine Fördereinrichtung zum Fördern eines einzulagernden Stapels oder eines auszulagernden Stapels innerhalb der Regaleinheit aufweist, wobei die Fördereinrichtung innerhalb der Regaleinheit so angeordnet ist, dass sie sich unterhalb und/oder oberhalb von Lagerorten befindet. Da die Fördereinrichtung innerhalb der Regaleinheit und bevorzugt nicht seitlich versetzt zu der Regaleinheit angeordnet ist, benötigt das Regalsystem relativ wenig Fläche. Die Fördereinrichtung umfasst bevorzugt ein oder mehrere Förderbänder, die innerhalb der Regaleinheit unterhalb und/oder oberhalb von Lagerorten angeordnet sind. Die Regaleinheit ist bevorzugt angepasst, Stapel von Buchdecken an den Lagerorten der Regaleinheit zu lagern und das Förderband ist bevorzugt angepasst, in die Regaleinheit einzulagernde Stapel von Buchdecken und aus der Regaleinheit auszulagernde Stapel von Buchdecken zu fördern.

Das Stapellager umfasst bevorzugt eine Objektaufnahmeeinrichtung zum Aufnehmen und Abgeben von Stapeln von Buchdecken, wobei die Objektaufnahmeeinrichtung eine Laufbandeinheit und eine Halteeinrichtung zum Halten der Laufbandeinheit aufweist, wobei die Objektaufnahmeeinrichtung so angepasst ist, dass die Laufbandeinheit zum Aufnehmen und/oder Abgeben eines Stapels von Buchdecken aus der Halteeinrichtung heraus- und in die Halteeinrichtung hineinbewegbar ist. Die Objektaufnahmeeinrichtung kann entsprechend der oben beschriebenen Objektaufnahmeeinrichtungen des ersten und/oder des zweiten Regalnutzungsgeräts ausgebildet sein.

Der Entstapler ist ausgebildet, einen Stapel von Buchdecken aufzunehmen, diesen Stapel von Buchdecken zu entstapeln, das heißt, die Buchdecken zu vereinzeln, und die einzelnen Buchdecken abzugeben. Der Entstapler umfasst bevorzugt a) eine Abnehmeeinheit zum Abnehmen und Halten einer obersten Buchdecke von einem Stapel von Buchdecken und b) eine Bewegungseinheit zum Bewegen der Abnehmeeinheit mit der abgenommenen und gehaltenen Buchdecke von dem Stapel von Buchdecken zu einem Abgabeort. Der Entstapler ermöglicht ein Verwalten von Buchdecken derart, dass Buchdecken zunächst in einem Stapellager in Stapeln gelagert werden, wobei sie, wenn sie zum Herstellen eine Buches benötigt werden, aus dem Stapellager als Stapel ausgelagert werden können, wonach sie mittels des Entstaplers vereinzelt werden. Die vereinzelten Buchdecken können dann in einem Regalsystem zwischengelagert werden, bevor sie zum Herstellen der Bücher verwendet werden.

Die Abnehmeeinheit weist bevorzugt Haltelemente zum zeitweiligen Halten einer Buchdecke und ein Niederhalteelement zum Niederhalten eines Schrenzes der Buchdecke auf. Insbesondere ist der Entstapler angepasst, beim Abnehmen der obersten Buchdecke den Schrenz der obersten Buchdecke mittels des Niederhalteelements nieder zu halten, um die Seiten der obersten Buchdecke anzuheben und von dem Stapel zu lösen, und, nachdem die Seiten der obersten Buchdecke gelöst worden sind, die Abnehmeeinheit mittels der Bewegungseinheit zu dem Abgabeort zu bewegen. Durch das vorhergehende Lösen der Seiten der obersten Buchdecke von entsprechenden Seiten der darunter liegenden Buchdecke kann die Wahrscheinlichkeit reduziert werden, dass die Abnehmeeinheit zwei Buchdecken gleichzeitig abnimmt, wodurch die Vereinzelungsqualität zunehmen kann. Die Halteelemente der Abnehmeeinheit sind bevorzugt Vakuumdüsen, die die jeweilige Buchdecke durch Unterdruck halten. Das Niederhalteelement ist bevorzugt elastisch, insbesondere mittels einer Feder, ausgebildet.

Das Lagersystem umfasst zudem bevorzugt eine Fördereinrichtung zum Fördern von Buchdecken entlang eines Förderweges, wobei die Fördereinrichtung angepasst ist, die Stapel von Buchdecken von dem Stapellager zu dem Entstapler, die einzelnen Buchdecken von dem Entstapler zu dem ersten Regalnutzungsgerät des Regalsystems und die Buchdecken von dem zweiten Regalnutzungsgerät des Regalsystem zu einer Zuführeinheit zum Zuführen der Buchdecken zu einer Buchbindeeinheit zu fördern.

Die Fördereinrichtung des Lagersystems weist bevorzugt eine oder mehrere Strecken zum Einbringen von Buchdecken in den Förderweg und/oder zum Ausbringen von Buchdecken aus dem Förderweg auf. Zudem kann das Lagersystem eine Fehlererkennungseinheit zum Erkennen von Fehlern aufweisen, wobei die Fördereinrichtung angepasst sein kann, in Abhängigkeit von der Erkennung eines Fehlers eine Buchdecke aus dem Förderweg auf die jeweilige Strecke zu fördern. Die Fehlererkennungseinheit kann beispielsweise angepasst sein, eine identifizierte Buchdecke mit einer erwarteten Buchdecke zu vergleichen, die sie beispielsweise einer gespeicherten Liste von erwarteten Buchdecken entnehmen kann, um festzustellen, ob die identifizierte Buchdecke die zum jetzigen Zeitpunkt richtige ist. Wenn dies nicht der Fall sein sollte, kann die Fördereinrichtung die identifizierte Buchdecke mittels der Strecke aus dem Förderweg entfernen. Die Fehlererkennungseinheit kann auch angepasst sein, andere Fehler zu erkennen, wie beispielsweise Herstellungsfehler, wobei auch in diesem Fall die jeweilige Buchdecke mittels der Strecke aus dem Förderweg entfernt werden kann. Die Fehlererkennungseinheit kann zudem angepasst sein, eine fehlerhafte Buchdecke eines Stapels von Buchdecken zu erkennen, wobei in diesem Fall der Stapel von Buchdecken aus dem Förderweg entfernt werden kann. Beispielsweise kann die Fehlererkennungseinheit angepasst sein, eine fehlerhafte oberste Buchdecke eines Stapels von Buchdecken zu erkennen, wonach dann dieser Stapel aus dem Förderweg entfernt werden kann.

Die Fördereinrichtung kann eine Verteilungsweiche aufweisen, um der Strecke zum Einbringen von Buchdecken in den Förderweg und/oder zum Ausbringen von Buchdecken aus dem Förderweg Buchdecken zuzuführen bzw. von dieser aufzunehmen. Die Verteilungsweiche kann ausgebildet sein, fehlerhaft produzierte Stapel von Buchdecken auszuschleusen, das heißt aus dem Förderweg zu entfernen. Die Verteilungsweiche kann zwischen einer Buchdecken-Herstellungseinheit und dem Stapellager angeordnet sein. Ob ein Stapel fehlerhaft produziert worden ist, kann beispielsweise mittels der Fehlererkennungseinheit detektiert werden. Die Fehlererkennungseinheit kann beispielsweise in der Buchdecken-Herstellungseinheit integriert sein, so dass die Buchdecken-Herstellungseinheit ein Fehlersignal erzeugen kann, wenn ein fehlerhafter Stapel von Buchdecken hergestellt worden ist. Wenn die Buchdecken-Herstellungseinheit ein derartiges Fehlersignal erzeugt, kann die Verteilungsweiche den entsprechenden fehlerhaften Stapel von Buchdecken aus dem Förderweg entfernen. Die Verteilungsweiche selbst kann eine Identifizierungseinheit zum Identifizieren einer Buchdecke und damit eines Stapels von Buchdecken aufweisen, so dass die Verteilungsweiche vor dem Entfernen eines Stapels von Buchdecken aus dem Förderweg verifizieren kann, ob der zu entfernende Stapel von Buchdecken wirklich der fehlerhafte Stapel ist.

Nachdem der fehlerhafte Stapel von Buchdecken aus dem Förderweg entfernt worden ist, kann dieser beispielsweise manuell überprüft werden, wonach der überprüfte Stapel von Buchdecken, nachdem der Fehler beispielsweise behoben worden ist, wieder mittels der Verteilungsweiche in den Förderweg eingebracht werden kann. Die bevorzugten Identifizierungseinheiten des Lagersystems ermöglichen es, fehlerhafte Buchdecken aus einem Stapel von Buchdecken zu entfernen und danach den so korrigierten Stapel von Buchdecken wieder in den Förderweg einzubringen, da die Identifizierungseinheiten die einzelnen Buchdecken, die sich im Lagersystem befinden, identifizieren können. Das Lagersystem kann daher so ausgestaltet sein, dass es nicht zwingend notwendig ist, dass die Buchdecken eines Stapels eine vorgeschriebene Reihenfolge aufweisen.

Die Fördereinrichtung ist bevorzugt angepasst, hergestellte Stapel von Buchdecken von der Buchdecken-Herstellungseinheit zu dem Stapellager zu fördern, so dass die hergestellten Stapel von Büchern in das Stapellager, insbesondere in Fächer einer Regaleinheit des Stapellagers, eingelagert werden können. Die Fördereinrichtung kann aber auch angepasst sein, einen hergestellten Stapel von Buchdecken ohne Einlagerung in das Stapellager direkt zu dem Entstapler zu fördern. Das Lagersystem kann insbesondere eine Stapelhöhen-Bereitstellungseinheit zum Bereitstellen eines Stapelhöhenwertes, der indikativ ist für die Höhe eines hergestellten Stapels von Buchdecken, aufweisen, wobei die Fördereinrichtung ausgebildet sein kann, einen Stapel von Buchdecken ohne Einlagerung in das Stapellager direkt zu dem Entstapler zu fördern, wenn der von der Stapelhöhen-Bereitstellungseinheit bereitgestellte Stapelhöhenwert einen vordefinierten Wert unterschreitet. Die Stapelhöhen-Bereitstellungseinheit umfasst beispielsweise einen Sensor wie einen Lichtsensor oder einen anderen Sensor zum Messen der jeweiligen Stapelhöhe. Die Stapelhöhen-Bereitstellungseinheit kann aber auch einfach angepasst sein, Signale, die indikativ sind für die jeweilige Stapelhöhe, von der Buchdecken-Herstellungseinheit zu empfangen und dann den entsprechenden Stapelhöhenwert bereitzustellen. Die Fördereinrichtung kann zudem angepasst sein, auf Basis anderer Kriterien zu entscheiden, ob ein Stapel von Buchdecken direkt zu dem Entstapler gefördert wird oder zunächst in das Stapellager eingelagert wird, wobei die Kriterien beispielsweise die Auslastung des Stapellagers und/oder des Regalsystems und/oder das Gewicht des jeweiligen Stapels von Buchdecken oder andere Charakteristika umfassen können.

Die Buchdecken-Herstellungseinheit kann angepasst sein, beispielsweise Stapel von bis zu 42 Buchdecken zu erzeugen, wobei die Buchdecken eines Stapels bevorzugt formatrein sind. Buchdecken eines Stapels gelten beispielsweise als formatrein, wenn die Buchdecken so dimensioniert sind, dass die schließlich hergestellten Bücher dieselbe Höhe und dieselbe Breite aufweisen. Die Dicke der final hergestellten Bücher kann unterschiedlich sein. Die Buchdecken-Herstellungseinheit kann aber auch angepasst sein, nicht formatreine Stapel von Buchdecken zu erzeugen.

Ein weiterer Aspekt der Erfindung bezieht sich auf ein Herstellungssystem zum Herstellen von Büchern, wobei das Herstellungssystem umfasst:
- eine Buchdecken-Herstellungseinheit zum Herstellen von Stapeln von Buchdecken,
- das Lagersystem nach Anspruch 9 zum Lagern von Buchdecken,
- eine Buchblöcke-Herstellungseinheit zum Herstellen von Buchblöcken,
- eine Buchbindeeinheit zum Herstellen von Büchern durch Binden von Buchdecken mit dazugehörigen Buchblöcken, und
- eine Zuführeinrichtung zum Zuführen von Buchdecken von dem Regalsystem des Lagersystems und von Buchblöcken von der Buchblöcke-Herstellungseinheit zu der Buchbindeeinheit.

Das Herstellungssystem umfasst des Weiteren bevorzugt eine Signaleinheit, die ausgebildet ist, ein Signal zum Herstellen von zu einem Stapel von Buchdecken gehörenden Buchblöcken an die Buchblöcke-Herstellungseinheit zu senden und/oder ein Signal zum Einlagern des Stapels von Buchdecken in das Stapellager an das Lagersystem zu senden, wenn die Buchdecken-Herstellungseinheit diesen Stapel von Buchdecken hergestellt hat. Dadurch kann beispielsweise das Herstellen der Buchblöcke mit dem Herstellen der Buchdecken synchronisiert werden. Eine weitere Signaleinheit kann zudem angepasst sein, ein Signal zum Auslagern eines Stapels von Buchdecken aus dem Stapellager an das Stapellager zu senden, wenn die dazugehörigen Buchblöcke von der Buchblöcke-Herstellungseinheit hergestellt worden sind. Dadurch wird das Auslagern der Stapel von Buchdecken mit dem Herstellen der dazugehörigen Buchblöcke synchronisiert.

Die Zuführeinrichtung ist bevorzugt angepasst, der Buchbindeeinheit Buchblöcke und dazugehörige Buchdecken in der entsprechenden Reihenfolge und insbesondere zeitgleich zuzuführen. Dazu weist die Zuführeinrichtung bevorzugt eine weitere Signaleinheit auf, die beim Eintreffen eines Buchblockes ein Auslieferungssignal an das Regalsystem übermittelt, wonach das Regalsystem die dazugehörige Buchdecke auslagert und die Fördereinrichtung die ausgelagerte Buchdecke zu der Zuführeinrichtung fördert.

Die Erfindung bezieht sich des Weiteren auf ein Verfahren zum Einlagern von Objekten, insbesondere von einzelnen Buchdecken, in ein Regalsystem nach einem der Ansprüche 1 bis 8 und zum Auslagern der Objekte aus dem Regalsystem, wobei das Verfahren umfasst:
- Einlagern von Objekten in die Regaleinheit des Regalsystems über die Einlagerungsseite der Regaleinheit des Regalsystems durch das erste Regalnutzungsgerät des Regalsystems, und
- Auslagern von Objekten aus der Regaleinheit über die Auslagerungsseite des Regalsystems durch das zweite Regalnutzungsgerät des Regalsystems. Vorzugweise wird ein Verfahren zum Einlagern von Objekten, insbesondere von Stapeln von Buchdecken, in ein Regalsystem des Stapellagers und zum Auslagern der Objekte aus dem Regalsystem bereitgestellt, wobei das Verfahren aufweist:
- Fördern eines einzulagernden Objekts, insbesondere eines Stapels von Buchdecken, innerhalb der Regaleinheit des Regalsystems mittels der Fördereinrichtung des Regalsystems zu einem Aufnahmeort, wobei die Fördereinrichtung innerhalb der Regaleinheit angeordnet ist, so dass sich die Fördereinrichtung unterhalb und/oder oberhalb von Lagerorten des Regaleinheit befindet,
- Aufnehmen des Objekts an dem Aufnahmeort durch eine Objektaufnahmeeinrichtung, Bewegen der Objektaufnahmeeinrichtung zu einem Lagerort der Regaleinheit und Abgeben des Objekts an dem Lagerort,
- Entnehmen des Objekts von dem Lagerort durch die Objektaufnahmeeinrichtung, Bewegen der Objektaufnahmeeinrichtung zu einem Abgabeort und Abgeben des Objekts an dem Abgabeort, und
- Fördern des Objekts mittels der Fördereinrichtung weg von dem Abgabeort, um das Objekt aus der Regaleinheit zu bewegen.

In einer bevorzugten Ausführungsform sind der Aufnahmeort und der Abgabeort identisch.

Gemäß eines Objektaufnahmeverfahrens zum Aufnehmen und Abgeben von Objekten, insbesondere von Buchdecken und/oder von Stapeln von Buchdecken, mittels einer der oben genannten Objektaufnahmeeinrichtungen wird die Laufbandeinheit der Objektaufnahmeeinrichtung zum Aufnehmen und/oder Abgeben eines Objekts aus der Halteeinrichtung der Objektaufnahmeeinrichtung heraus- und in die Halteeinrichtung hineinbewegt.

Gemäß eines Verfahrens zum Entstapeln eines Stapels von Buchdecken und zum Abgeben einzelner Buchdecken mittels des oben genannten Entstaplers nimmt die Abnehmeeinheit des Entstaplers eine oberste Buchdecke von einem Stapel von Buchdecken ab und hält diese und die Bewegungseinheit des Entstaplers bewegt dann die Abnehmeeinheit mit der abgenommenen und gehaltenen Buchdecke von dem Stapel von Buchdecken zu einem Abgabeort.

Zudem wird ein Förderverfahren zum Fördern von Buchdecken bereitsgestellt, wobei das Förderverfahren aufweist:
- Fördern von Stapeln von Buchdecken von einer Buchdecken-Herstellungseinheit zu einem Stapellager,
- Einlagern der Stapel von Buchdecken in das Stapellager,
- Auslagern der Stapel von Buchdecken aus dem Stapellager,
- Fördern der Stapel von Buchdecken von dem Stapellager zu einem Entstapler,
- Aufnehmen der Stapel von Buchdecken und Abgeben einzelner Buchdecken durch den Entstapler,
- Fördern der einzelnen Buchdecken von dem Entstapler zu einem Regalsystem nach einem der Ansprüche 1 bis 8,
- Einlagern der einzelnen Buchdecken in das Regalsystem gemäß dem Verfahren nach Anspruch 11,
- Auslagern der einzelnen Buchdecken aus dem Regalsystem, und
- Fördern der einzelnen Buchdecken von dem Regalsystem zu einer Zuführeinrichtung zum Zuführen der einzelnen Buchdecken zu einer Buchbindeeinheit. Des Weiteren betrifft die Erfindung ein Herstellungsverfahren zum Herstellen von Büchern, wobei das Herstellungsverfahren umfasst:
- Fördern einzelner Buchdecken zu einer Zuführeinheit zum Zuführen der einzelnen Buchdecken zu einer Buchbindeeinheit gemäß dem Verfahren nach Anspruch 12,
- Herstellen von zu den einzelnen Buchdecken gehörenden Buchblöcken durch eine Buchblöcke-Herstellungseinheit,
- Zuführen der einzelnen Buchdecken und der hergestellten dazugehörigen Buchblöcke zu einer Buchbindeeinheit, und
- Herstellen von Büchern durch Binden der Buchdecken mit den dazugehörigen Buchblöcken durch die Buchbindeeinheit.

Vorzusgweise wird zudem ein Computerprogramm zum Steuern eines Regalsystems nach einem der Ansprüche 1 bis 8 zum Einlagern von Objekten bereitsgestellt, insbesondere von einzelnen Buchdecken, in das Regalsystem und zum Auslagern der Objekte aus dem Regalsystem, wobei das Computerprogramm Programmcodemittel aufweist, die angepasst sind, das Regalsystem derart zu steuern, dass das Verfahren gemäß Anspruch 11 durchgeführt wird, wenn das Computerprogramm auf einem Computer ausgeführt wird, der das Regalsystem steuert.

Ein Computerprogramm zum Steuern eines Regalsystems des oben genannten Stapellagers zum Einlagern von Stapeln von Buchdecken in das Regalsystem und zum Auslagern der Stapel aus dem Regalsystem wird vorgestellt, wobei das Computerprogramm Programmcodemittel aufweist, die angepasst sind, das Regalsystem derart zu steuern, dass das oben beschriebene Verfahren zum Einlagern und Auslagern von Stapeln von Buchdecken durchgeführt wird, wenn das Computerprogramm auf einem Computer ausgeführt wird, der das Regalsystem steuert.

Ein Computerprogramm zum Steuern einer Objektaufnahmeeinrichtung zum Aufnehmen und Abgeben von Objekten, insbesondere von Buchdecken und/oder Stapeln von Buchdecken, wird vorgestellt, wobei das Computerprogramm Programmcodemittel aufweist, die angepasst sind, die Objektaufnahmeeinrichtung derart zu steuern, dass das oben beschriebene Objektaufnahmeverfahren durchgeführt wird, wenn das Computerprogramm auf einem Computer ausgeführt wird, der die Objektaufnahmeeinrichtung steuert. Es wird auch ein Computerprogramm zum Steuern eines Entstaplers zum Entstapeln eines Stapels von Buchdecken und zum Abgeben einzelner Buchdecken vorgestellt, wobei das Computerprogramm Programmcodemittel aufweist, die angepasst sind, den Entstapler derart zu steuern, dass das Verfahren zum Entstapeln eines Stapels von Buchdecken durchgeführt wird, wenn das Computerprogramm auf einem Computer ausgeführt wird, der den Entstapler steuert.

Vorzugsweise wird ein Computerprogramm zum Steuern eines Lagersystems nach Anspruch 9 zum Fördern von Buchdecken bereitsgestellt, wobei das Computerprogramm Programmcodemittel aufweist, die angepasst sind, das Lagersystem derart zu steuern, dass das Förderverfahren gemäß Anspruch 12 durchgeführt wird, wenn das Computerprogramm auf einem Computer ausgeführt wird, der das Lagersystem steuert.

Außerdem wird ein Computerprogramm zum Steuern eines Herstellungssystems nach Anspruch 10 zum Herstellen von Büchern, wobei das Computerprogramm Programmcodemittel aufweist, die angepasst sind, das Herstellungssystem derart zu steuern, dass das Herstellungsverfahren gemäß Anspruch 13 durchgeführt wird, wenn das Computerprogramm auf einem Computer ausgeführt wird, der das Herstellungssystem steuert.

Es sollte verstanden werden, dass die Verfahren und Computerprogramme Ausführungsformen aufweisen können, die den Ausführungsformen der dazugehörigen Systeme, Einrichtungen bzw. Vorrichtungen entsprechen, die insbesondere in den abhängigen Ansprüchen und der Beschreibung aufgeführt sind. So können beispielsweise das Verfahren zum Einlagern von Objekten in ein Regalsystem und zum Auslagern der Objekte aus dem Regalsystem und das Computerprogramm zum Steuern eines Regalsystems Ausführungsformen aufweisen, die den Ausführungsformen des Regalsystems entsprechen.

Im Folgenden werden Ausführungsformen der Erfindung unter Bezugnahme auf folgende Figuren beschrieben, wobei
- Fig. 1: schematisch und beispielhaft ein Herstellungssystem zum Herstellen von Fotobüchern zeigt,
- Fig. 2: schematisch und beispielhaft einige Komponenten des Herstellungssystems zum Herstellen von Fotobüchern zeigt,
- Fig. 3: schematisch und beispielhaft ein Regalsystem und angrenzende Komponenten des Herstellungssystems zum Herstellen von Fotobüchern zeigt,
- Fig. 4: schematisch und beispielhaft ein Lastaufnahmemittel und eine Bewegungseinheit eines Regalbediengeräts des Regalsystems zeigt,
- Fig. 5: schematisch und beispielhaft ein Stapellager zum Lagern von Stapeln von Buchdecken und angrenzende Komponenten des Herstellungssystem zum Herstellen von Fotobüchern zeigt,
- Fig. 6: schematisch und beispielhaft einen Entstapler zum Entstapeln eines Stapels von Buchdecken und zum Ausgeben einzelner Buchdecken und angrenzende Komponenten des Herstellungssystems zum Herstellen von Fotobüchern zeigt,
- Fig. 7: schematisch und beispielhaft eine Abnehmeeinheit und eine Bewegungseinheit des Entstaplers zeigt,
- Fig. 8: beispielhaft ein Anwinkeln einer obersten Buchdecke eines Stapels von Buchdecken durch den Entstapler zum Lösen der obersten Buchdecke von dem Stapel von Buchdecken illustriert,
- Fig. 9: beispielhaft ein Abheben der angewinkelten obersten Buchdecke von dem Stapeln von Buchdecken illustriert,
- Fig. 10: beispielhaft ein Flussdiagramm zeigt, das eine Ausführungsform eines Herstellungsverfahrens zum Herstellen von Fotobüchern illustriert,
- Fig. 11: beispielhaft ein Flussdiagramm zeigt, das eine Ausführungsform eines Verfahrens zum Einlagern von einzelnen Buchdecken in das Regalsystem und zum Auslagern der einzelnen Buchdecken aus dem Regalsystem illustriert,
- Fig. 12: beispielhaft ein Flussdiagramm zeigt, das eine Ausführungsform eines Verfahrens zum Einlagern von Stapeln von Buchdecken in das Stapellager und zum Auslagern der Stapel von Buchdecken aus dem Stapellager illustriert,
- Fig. 13: beispielhaft ein Flussdiagramm zeigt, das eine Ausführungsform eines Verfahrens zum Entstapeln eines Stapels von Buchdecken und zum Abgeben einzelner Buchdecken mittels des Entstaplers illustriert,
- Fig. 14: beispielhaft ein Flussdiagramm zeigt, das eine Ausführungsform eines Objektaufnahmeverfahrens zum Aufnehmen und Abgeben von Objekten, insbesondere von Buchdecken oder von Stapeln von Buchdecken, illustriert.
- Fig. 15: schematisch und beispielhaft ein Lastaufnahmemittel eines Regalbediengerätes des Regalsystems in einer Position zeigt, in der eine Laufbandeinheit des Lastaufnahmemittels eingefahren ist,
- Fig. 16: schematisch und beispielhaft das Lastaufnahmemittel des Regalsystems in einer ausgefahrenen Position zeigt, in der die Laufbandeinheit herausgefahren worden ist,
- Fig. 17: schematisch und beispielhaft Komponenten der Laufbandeinheit des Lastaufnahmemittels des Regalsystems zeigt,
- Fig. 18: schematisch und beispielhaft das Lastaufnahmemittel des Regalsystems unmittelbar vor der Einlagerung einer einzelnen Buchdecke illustriert,
- Fig. 19: schematisch und beispielhaft das Lastaufnahmemittel des Regalsystems während des Einlagerns der einzelnen Buchdecke illustriert,
- Fig. 20: beispielhaft Halteelemente und eine Platte eines Umsetzers zum Umsetzen einer einzelnen Buchdecke von einem ersten Förderband auf ein zweites Förderband unmittelbar vor einer Aufnahme einer Buchdecke illustriert,
- Fig. 21: beispielhaft ein Ausrichten einer umzusetzenden Buchdecke mit Hilfe eines Anschlags illustriert,
- Fig. 22: schematisch und beispielhaft ein Lastaufnahmemittel des Stapellagers in einer Position zeigt, in der eine Laufbandeinheit in eine Halteeinrichtung des Lastaufnahmemittels eingefahren ist, und
- Fig. 23: schematisch und beispielhaft das Lastaufnahmemittel des Stapellagers in einer Position zeigt, in der die Laufbandeinheit aus der Halteeinrichtung herausgefahren ist.

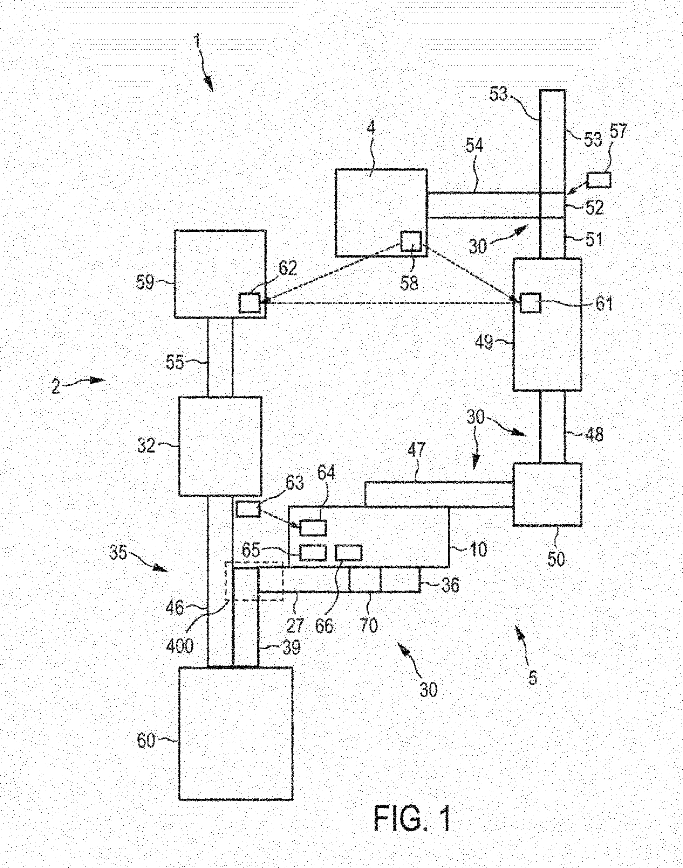

Eine Ausführungsform eines Herstellungssystems zum Herstellen von Fotobüchern ist in der Fig. 1 schematisch und beispielhaft dargestellt. Das Herstellungssystem 1 umfasst eine Buchblöcke-Herstellungseinheit 2 zum Herstellen von Buchblöcken der zu produzierenden Fotobücher, eine Buchdecken-Herstellungseinheit 4 zum Herstellen von Stapeln von Buchdecken der zu produzierenden Fotobücher, ein Lagersystem 5 zum Lagern von Buchdecken, wobei das Lagersystem 5 angepasst ist, die Buchdecken von der Buchdecken-Herstellungseinheit 4 zu einer Zuführeinrichtung 35 zu fördern, und wobei die Zuführeinrichtung 35 angepasst ist, die Buchdecken und die Buchblöcke einer Buchbindeeinheit 60 zuzuführen. Die Buchbindeeinheit 60 ist angepasst, die Fotobücher durch Binden von Buchdecken mit dazugehörigen Buchblöcken herzustellen.

Die Buchdecken-Herstellungseinheit 4 kann beispielsweise ein Buchdeckenautomat des Typs DA 270 des Herstellers KOLBUS GmbH aus Rahden oder eine andere Buchdecken-Herstellungseinheit sein.

Das Lagersystem 5 umfasst ein Stapellager 49, das angepasst ist, die hergestellten Stapel von Buchdecken einzulagern und auch wieder auszulagern. Das Lagersystem 5 umfasst des Weiteren einen Entstapler 50 zum Aufnehmen der Stapel von Buchdecken und zum Abgeben einzelner Buchdecken. Zudem umfasst das Lagersystem 5 ein Regalsystem 10 zum Einlagern und Auslagern der einzelnen Buchdecken und eine Fördereinrichtung 30, die beispielsweise mehrere Förderbänder 54, 52, 51, 48, 47 und 27 aufweist, um den jeweils hergestellten Stapel von Buchdecken von der Buchdecken-Herstellungseinheit 4 zu dem Stapellager 49 und von dem Stapellager 49 zu dem Entstapler 50, die einzelnen Buchdecken von dem Entstapler 50 zu dem Regalsystem 10 und schließlich die einzelnen Buchdecken von dem Regalsystem 10 zu der Zuführeinheit 35 zu fördern.

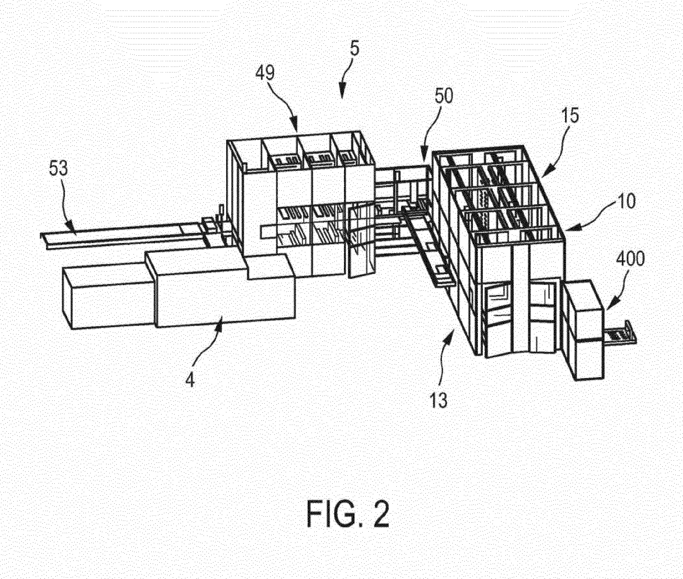

Eine Ausführungsform des Lagersystems 5 und weiterer Komponenten des Herstellungssystems 1 sind etwas detaillierter in Fig. 2 beispielhaft dargestellt. Fig. 2 zeigt insbesondere eine Ausführungsform der Buchdecken-Herstellungseinheit 4, des Stapellagers 49, des Entstaplers 50, des Regalsystems 10 mit einer Einlagerungsseite 13 und einer Auslagerungsseite 15 und eines Umsetzers 400.

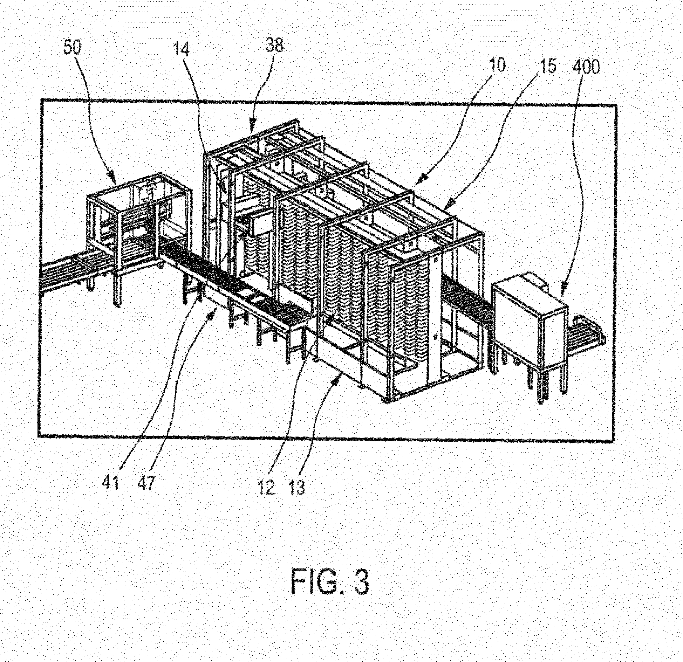

In Fig. 3 sind weitere Details einer Ausführungsform des Regalsystems 10 beispielhaft dargestellt. In dieser Ausführungsform umfasst das Regalsystem ein Traggerüst 38, an dem Wände angebracht sind, die eine Regaleinheit 12, ein erstes Regalbediengerät 14 und ein zweites Regalbediengerät umschließen. Die Wände sind nur in der Fig. 2 und nicht in der Fig. 3 gezeigt, damit in der Fig. 3 die inneren Komponenten des Regalsystems 10 gezeigt werden können. Die Regaleinheit 12 ist angepasst, einzelne Buchdecken zu lagern, wobei die Regaleinheit 12 eine Einlagerungsseite 13 und eine der Einlagerungsseite 13 gegenüberliegende Auslagerungsseite 15 aufweist. Die Regaleinheit 12 umfasst mehrere Regalböden, die jeweils auf der Auslagerungsseite einen virtuellen Anschlag aufweisen, wobei das erste Regalbediengerät 14 angepasst ist, die einzelnen Buchdecken beim Einlagern bis zu dem virtuellen Anschlag zu bewegen. Alle im Regalsystem 10 befindlichen Buchdecken weisen somit in Auslagerungsrichtung dieselbe Position auf, selbst wenn die einzelnen Buchdecken unterschiedliche Abmessungen aufweisen. Es ist also bevorzugt, dass die Buchdecken unter Berücksichtigung der Abmessung der jeweiligen Buchdecke in Auslagerungsrichtung in das Regalsystem 10 so eingelagert werden, dass alle im Regalsystem 10 befindlichen Buchdecken in Auslagerungsrichtung dieselbe Position aufweisen.

Die Regalböden 56 sind nicht komplett geschlossen sind, sondern weisen Öffnungen auf.

In dieser Ausführungsform sind die Öffnungen durch beabstandet voneinander angeordnete Bodenelemente ausgebildet, die als Zinken bezeichnet werden könnten. Diese Öffnungen in den Regalböden können ein Ein- und Auslagern mittels des ersten und zweiten Regalbediengeräts erleichtern.

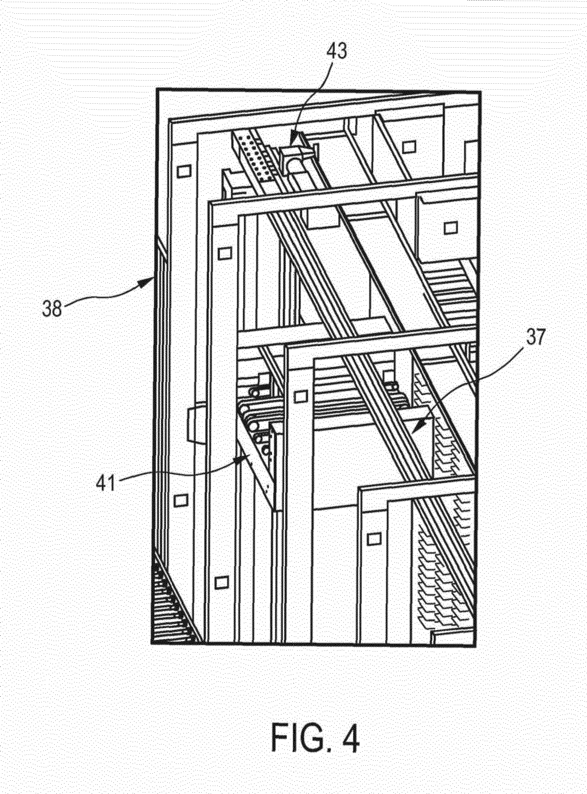

Das erste Regalbediengerät 14 ist angepasst, einzelne Buchdecken in die Regaleinheit 12 über die Einlagerungsseite 13 einzulagern. Das zweite Regalbediengerät ist angepasst, einzelne Buchdecken aus der Regaleinheit 12 über die Auslagerungsseite 15 auszulagern. Das erste Regalbediengerät 14 umfasst ein Lastaufnahmemittel 41 zum Aufnehmen der jeweiligen Buchdecke durch eine Eingabeöffnung in der Wand des Regalsystems 10, die an der Einlagerungsseite 13 angeordnet ist. Diese Eingabeöffnung entspricht auch der sogenannten Ausgangsposition des ersten Regalbediengeräts 14. Wie in Fig. 4 beispielhaft und schematisch illustriert, umfasst das erste Regalbediengerät 14 des Weiteren eine horizontale Schiene 37, entlang der eine Bewegungseinheit 43 des ersten Regalbediengeräts 14 horizontal bewegbar ist, wobei das Lastaufnahmemittel 41 an der Bewegungseinheit 43 hängt. Durch Bewegen der Bewegungseinheit 43 entlang der Schiene 37 kann die horizontale Position des Lastaufnahmemittels 41 verändert werden. Die Bewegungseinheit 43 ist zudem angepasst, den vertikalen Abstand zwischen dem Lastaufnahmemittel 41 und der Bewegungseinheit 43 zu verändern, um die vertikale Position des Lastaufnahmemittels 41 zu variieren. Auf diese Art kann das Lastaufnahmemittel von der Eingabeöffnung zu einem beliebigen Lagerort innerhalb der Regaleinheit 12 bewegt werden.

Auch das zweite Regalbediengerät umfasst ein Lastaufnahmemittel, eine Bewegungseinheit und eine Schiene, wobei diese Komponenten so angepasst sind, dass das Lastaufnahmemittel des zweiten Regalbediengeräts zu beliebigen Positionen bewegt werden kann. Insbesondere kann das Lastaufnahmemittel von einem Lagerort innerhalb der Regaleinheit 12, an dem eine Buchdecke aufgenommen wird, zu einer Ausgabeöffnung in der Wand des Regalsystems 10 bewegt werden, die auf der Auslagerungsseite 15 angeordnet ist. Die Position des zweiten Regalbediengeräts, in der sich das Lastaufnahmemittel an der Ausgabeöffnung befindet, kann als Ausgangsposition des zweiten Regalbediengeräts aufgefasst werden. Das Regalsystem 10 weist erfindungsgemäß eine Steuerungs- und Kommunikationseinheit 64 auf, wobei diese Einheit 64 angepasst ist, die einzelnen Komponenten des Regalsystems 10, wie die ersten und zweiten

Regalbediengeräte, zu steuern.

Das Lastaufnahmemittel des ersten Regalbediengeräts ist bevorzugt so ausgebildet, dass es eine Buchdecke aktiv von dem zuführenden Förderband entnehmen und die jeweilige Buchdecke dann aktiv an dem entsprechenden Lagerort ablegen kann. Hierzu weist das Lastaufnahmemittel bevorzugt integrierte angetriebene Riemen auf. Das Lastaufnahmemittel des zweiten Regalbediengeräts ist bevorzugt angepasst, die jeweilige Buchdecke der Regaleinheit aktiv zu entnehmen und dann aktiv an ein Förderband abzugeben, das die jeweilige Buchdecke zu dem Umsetzer 400 führt. Auch das Lastaufnahmemittel des zweiten Regalbediengeräts kann daher beispielsweise integrierte angetriebene Riemen aufweisen. Dieses aktive Aufnehmen und Abgeben der Buchdecken durch die Lastaufnahmemittel kann zu einer verkürzten Bewegungszeit während der Aufnahme und Abgabe der jeweiligen Buchdecke führen, wobei durch die Verwendung der Riemen die Buchdecken geschont werden.

Die Ausgangsposition des ersten Regalbediengeräts 14, das heißt die Eingabeöffnung, kann zentriert bezüglich der Regaleinheit 12 angeordnet sein. Auch die Ausgangsposition des zweiten Regalbediengeräts 16, d.h. die Ausgabeöffnung, kann zentriert bezüglich der Regaleinheit 12 angeordnet sein. Diese Zentrierung kann zu reduzierten Einlagerungswegstrecken und zu reduzierten Zeiten, die für die Einlagerung benötigt werden, und zu reduzierten Auslagerungsstrecken und zu reduzierten Zeiten führen, die für die Auslagerung benötigt werden. Zudem ist die Steuerungs- und Kommunikationseinheit 64 des Regalsystems 10 angepasst, das erste Regalbediengerät 14 so zu steuern, dass Wegstrecken von der Ausgangsposition, d.h. von der Eingabeöffnung, zu den Lagerorten und/oder Zeiten, die für die jeweilige Einlagerung benötigt werden, minimiert sind. Beispielsweise kann das erste Regalbediengerät 14 so gesteuert werden, dass die Buchdecken mit möglichst geringem Abstand zu der Eingabeöffnung eingelagert werden. Das heißt beispielsweise, dass jeweils derjenige nicht belegte Lagerort aus einer Vielzahl von Lagerorten gewählt wird, der der Ausgangsposition, an der die jeweilige Buchdecke aufgenommen wird, am nächsten liegt. Das erste Regalbediengerät 14 kann aber auch so gesteuert werden, dass jeweils der Lagerort ausgewählt wird, der ausgehend von der Eingabeöffnung, an der die jeweilige Buchdecke aufgenommen wird, am schnellsten zu erreichen ist. Unterschiede bezüglich des Kriteriums "kürzeste Wegstrecke" und des Kriteriums "schnellste Einlagerungszeit" können sich dadurch ergeben, dass das erste Regalbediengerät 14 in unterschiedlichen Richtungen unterschiedlich schnell bewegbar ist. Zudem kann das erste Regalbediengerät 14 derart gesteuert werden, dass die Wegstrecke für das zweite Regalbediengerät 16 beim Auslagern der jeweiligen Buchdecke minimiert wird und/oder dass die Auslagerungszeit, die für das Auslagern der jeweiligen Buchdecke benötigt wird, minimiert wird. Insbesondere kann das erste Regalbediengerät 14 so gesteuert werden, dass die Einlagerung so erfolgt, dass die Gesamtwegstrecke, die das erste Regalbediengerät 14 zum Einlagern und das zweite Regalbediengerät zum Auslagern benötigen, und/oder die Summe aus Einlagerungszeiten und Auslagerungszeiten, die für den Einlagerungsprozess bzw. den Auslagerungsprozess benötigt werden, minimiert werden.

In dieser Ausführungsform sind die Lagerbereiche an den unterschiedlichen Lagerorten innerhalb der Regaleinheit 12 gleich groß, wobei die Lagerorte nicht durch Begrenzungselemente voneinander abgegrenzt sind. In anderen Ausführungsformen können aber auch Begrenzungselemente, die Fächer bilden, auf den Regalböden vorhanden sein. Diese Fächer können gleich groß sein. In einer Ausführungsform kann die räumliche Verteilung der Lagerorte veränderbar sein. Auch die Größe der jeweiligen Lagerbereiche kann veränderbar sein, wobei auch in diesem Fall bevorzugt keine Begrenzungselemente, die Fächer bilden könnten, auf den Regalböden vorhanden sind. Eine dynamische Änderung von Lagerorten, das heißt eine dynamische Änderung der räumlichen Verteilung der Lagerorte, und/oder eine dynamische Änderung der Größe der Lagerbereiche, die den Lagerorten zugeordnet sind, kann beispielsweise in Abhängigkeit von der Menge einzulagernder Buchdecken und/oder den Abmessungen der jeweiligen Buchdecke erfolgen.

Zum Bestimmen der Größe der jeweiligen Buchdecke kann eine Identifizierungseinheit 65 verwendet werden, die schematisch in Fig. 1 angedeutet ist. Die Identifizierungseinheit 65 kann angepasst sein, Identifizierungselemente auf den Buchdecken zu erfassen. Das Regalsystem kann des Weiteren eine Speichereinheit 66 aufweisen, in der beispielsweise Abmessungen für identifizierte Buchdecken abgelegt sind, so dass die Abmessungen einer einzulagernden Buchdecke mittels der Identifizierungseinheit 65 und der Speichereinheit 66 bestimmt werden können. In anderen Ausführungsformen können natürlich auch andere Verfahren verwendet werden, um die Abmessungen einer Buchdecke zu ermitteln. Beispielsweise können Abmessungen einer Buchdecke automatisch gemessen werden, beispielsweise durch eine Verwendung optischer Mittel wie Lichtschranken.

Die Identifizierungselemente auf den Buchdecken sind bevorzugt Barcodes oder RFID-Elemente. Die Barcodes können eindimensionale Barcodes oder zweidimensionale Barcodes sein. Die Barcodes können auch farbige Barcodes sein. Die Identifizierungseinheit 65 ist entsprechend angepasst, mittels optischer Elemente einen Barcode oder mittels magnetischer Elemente ein RFID-Element zu erkennen.

Die Identifizierungseinheit 65 kann angepasst sein, die jeweilige Buchdecke bei der Aufnahme durch das erste Regalbediengerät 14 und/oder bei der Abgabe durch das zweite Regalbediengerät und/oder, wenn es in der Regaleinheit 12 eingelagert ist, zu identifizieren. Die Identifizierungseinheit 65 kann beispielsweise an dem ersten Regalbediengerät 14 und/oder an dem zweiten Regalbediengerät angebracht sein, das heißt insbesondere an den dazugehörigen Lastaufnahmemitteln. In einer bevorzugten Ausführungsform ist die Identifizierungseinheit 65 angepasst, das Identifizierungselement der jeweiligen Buchdecke von der Auslagerungsseite aus zu identifizieren, wenn die Buchdecke so auf den jeweiligen Regalboden geschoben worden ist, dass das Ende der Buchdecke an der Auslagerungsseite die gleiche Position in Auslagerungsrichtung aufweist wie andere gelagerte Buchdecken.

Die identifizierten Buchdecken werden zusammen mit deren Lagerorten in der Speichereinheit 66 gespeichert, so dass immer bekannt ist, welche Buchdecke sich an welchem Lagerort innerhalb der Regaleinheit 12 befindet. Basierend auf dieser Zuordnungsinformation kann das zweite Regalbediengerät der Regaleinheit 12 eine gewünschte Buchdecke entnehmen.

Da in der Speichereinheit 66 abgelegt ist, welche Buchdecke sich an welchem Lagerort innerhalb der Regaleinheit 12 befindet, ist auch der Auslastungsgrad des Regalsystems 10 bekannt. Basierend auf diesem Auslastungsgrad können die Lagerorte und die Größe der dazugehörigen Lagerbereiche dynamisch verändert werden. Wenn beispielsweise die Auslastung des Regalsystems 12 größer ist als ein vordefinierter Schwellwert, können für neu hinzukommende Buchdecken enger angeordnete Lagerorte innerhalb des Regalsystems 10 definiert werden.

Die Buchdecken-Herstellungseinheit 4 erzeugt Stapel von Buchdecken, die mittels des Förderbandes 54 zu einem weiteren Förderband 52 bewegt werden. Das Förderband 52 kann entweder in Richtung des Förderbandes 51 bewegt werden, um den jeweiligen Stapel zu dem Stapellager 49 zu fördern, oder in Richtung einer Strecke 53 zum Ausbringen eines jeweiligen Stapels von Buchdecken aus dem Förderweg. Das Förderband 52, das zum Einbringen und Ausbringen von Stapeln von Buchdecken verwendet werden kann, kann als Verteilungsweiche aufgefasst werden.

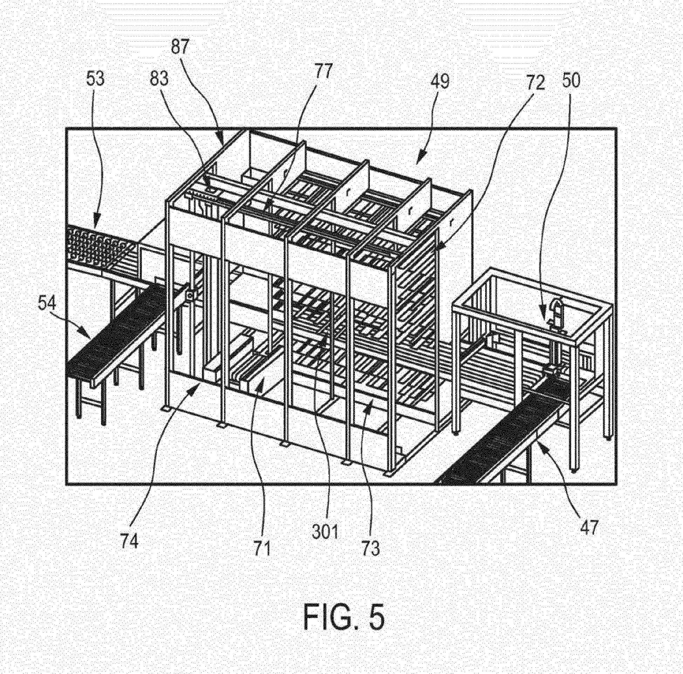

Eine Ausführungsform des Stapellagers 49 ist in der Fig. 5 schematisch und beispielhaft dargestellt. In dieser Ausführungsform umfasst das Stapellager 49 ein Traggerüst 87, an dem Wände angebracht sind, die eine Regaleinheit 72 und ein Regalbediengerät 74 umschließen. Die Wände sind in der Fig. 2 zu sehen und in der Fig. 5 nicht vollständig dargestellt, um das Innere des Stapelmanagers 49 zu zeigen. Die Regaleinheit 72 ist angepasst, Stapel von Buchdecken zu lagern, wobei die Regaleinheit 72 eine Zugriffsseite 73 aufweist, über die Stapel von Buchdecken in die Regaleinheit 72 eingelagert und daraus ausgelagert werden können. Auch das Stapellager 49 weist mehrere Regalböden auf, die in ausreichendem vertikalem Abstand zueinander angeordnet sind, um Stapel von Buchdecken einzulagern. Das Stapellager 49 hat bevorzugt die Funktion, Stapel von Buchdecken zwischenzulagern, insbesondere wenn die Kapazität des Regalsystems 10 nicht ausreichend ist, alle hergestellten Buchdecken sofort einzulagern.

Das Regalbediengerät 74 ist dazu eingerichtet, Stapel von Buchdecken in die Regaleinheit 72 über die Zugriffsseite 73 einzulagern und ebenfalls über die Zugriffsseite 73 auszulagern. Das Regalbediengerät 74 umfasst ein Lastaufnahmemittel 71 zum Aufnehmen der Stapel von Buchdecken von einer Fördereinrichtung, die in diesem Ausführungsbeispiel durch ein Förderband 301 gebildet wird, zum Ablegen der Stapel von Buchdecken an Lagerorten innerhalb der Regaleinheit 72, zum Aufnehmen der Stapel von Buchdecken an den Lagerorten und zum Abgeben der Stapel von Buchdecken an das Förderband 301. Das Regalbediengerät 74 umfasst des Weiteren eine Schiene 77, entlang der eine Bewegungseinheit 83 des Regalbediengeräts 74 bewegbar ist, wobei das Lastaufnahmemittel 71 an der Bewegungseinheit 83 hängt. Durch Bewegen der Bewegungseinheit 83 entlang der Schiene 77 kann die horizontale Position des Lastaufnahmemittels 71 verändert werden. Die Bewegungseinheit 83 ist zudem angepasst, den vertikalen Abstand zwischen dem Lastaufnahmemittel 71 und der Bewegungseinheit 83 zu verändern, um die vertikale Position des Lastaufnahmemittels 71 zu variieren.

Das Förderband 301 ist innerhalb der Regaleinheit 72 so angeordnet, dass sich das Förderband 301 unterhalb und oberhalb von Lagerorten befindet. Das Förderband 301 verläuft also durch die Regaleinheit 72 und nimmt in das Stapellager 49 einzulagernde Stapel von Buchdecken von dem Förderband 51 auf und gibt auszulagernde Stapel von Buchdecken an das Förderband 48 ab.

Das Lagersystem 5 umfasst bevorzugt des Weiteren eine Fehlererkennungseinheit 57 zum Erkennen von Fehlern, wobei das Förderband 52 so gesteuert werden kann, dass, wenn kein Fehler erkannt worden ist, der jeweilige Stapel in Richtung des Förderbandes 51 bewegt wird, und, wenn ein Fehler erkannt worden ist, der jeweilige Stapel zu der Strecke 53 bewegt wird. Die Fehlererkennungseinheit 57 kann beispielsweise angepasst sein, ein Identifizierungselement einer Buchdecke, insbesondere einer obersten Buchdecke eines Stapels, zu erkennen und die identifizierte Buchdecke mit einer erwarteten Buchdecke zu vergleichen, die sich beispielsweise einer gespeicherten Liste von zu erwartenden Buchdecken entnehmen lässt, um festzustellen, ob die identifizierte Buchdecke die zum jetzigen Zeitpunkt richtige Buchdecke ist. Wenn dies nicht der Fall sein sollte, kann die Fördereinrichtung 5 mittels des Förderbandes 52 und der Strecke 53 den entsprechenden Stapel von Buchdecken aus dem Förderweg entfernen. Die Fehlererkennungseinheit 57 kann auch angepasst sein, andere Fehler zu erkennen, wie beispielsweise Herstellungsfehler, wobei auch in diesem Fall der jeweilige Stapel von Buchdecken mittels des Förderbandes 52 und der Strecke 53 aus dem Förderweg entfernt werden kann. Informationen bezüglich der zu erwartenden obersten Buchdecke des jeweiligen Stapel kann die Fehlerkennungseinheit 57 beispielsweise von der Buchdecken-Herstellungseinheit 4 oder von einem unter näher beschriebenen Auftragsverwaltungssystem erhalten.

Die Strecke 53 kann auch verwendet werden, Stapel von Buchdecken manuell in den Förderweg einzuführen. Beispielsweise kann, nachdem ein Fehler in einem Stapel von Buchdecken behoben worden ist, dieser mittels der Strecke 53 und dem Förderband 52 wieder in den Förderweg eingebracht werden. Die Zusammensetzung dieses manuell eingeführten Stapels von Buchdecken kann manuell beispielsweise in das Auftragsverwaltungssystem oder in eine andere Datenbank, auf die die Komponenten des Herstellungssystems 1, insbesondere das Stapellager 49, Zugriff haben, eingegeben werden, wonach eine Identifizierungseinheit des Stapellagers 49 den Stapel von Buchdecken beispielsweise mittels eines gescannten Barcodes identifizieren kann, so dass, auch wenn Stapel von Buchdecken manuell in den Förderweg eingeführt werden, immer bekannt ist, welcher Stapel von Buchdecken an welchem Lagerort innerhalb des Stapellagers 49 angeordnet ist.

Die Buchdecken-Herstellungseinheit 4 ist bevorzugt angepasst, formatreine Stapel von Buchdecken zu erzeugen, wobei diese Stapel von Buchdecken bevorzugt maximal 42 Buchdecken umfassen.

Die Buchdecken-Herstellungseinheit 4 weist eine Steuerungs- und Kommunikationseinheit 58 auf, die angepasst ist, ein Signal zum Herstellen von zu einem Stapel von Buchdecken gehörenden Buchblöcken an die Buchblöcke-Herstellungseinheit 2 zu senden und ein Signal zum Einlagern des Stapels von Buchdecken in das Stapellager 49 an das Lagersystem 5, insbesondere an das Stapellager 49, zu senden, wenn die Buchdecken-Herstellungseinheit 4 diesen Stapel von Buchdecken hergestellt hat. Dadurch wird beispielsweise das Herstellen der Buchblöcke mit dem Herstellen der Buchdecken synchronisiert. Die entsprechenden Signale werden von einer Steuerungs- und Kommunikationseinheit 62 der Buchblöcke-Herstellungseinheit 2 und einer Steuerungs- und Kommunikationseinheit 61 des Lagersystems 5, die in diesem Beispiel in das Stapellager 49 integriert ist, empfangen. Die Steuerungs- und Kommunikationseinheit 62 der Buchblöcke-Herstellungseinheit 2 kann zudem angepasst sein, ein Signal zum Auslagern eines entsprechenden Stapels von Buchdecken aus dem Stapellager 49 an das Stapellager 49 zu senden, wenn die dazugehörigen Buchblöcke von der Buchblöcke-Herstellungseinheit 2 hergestellt worden sind. Dadurch wird das Auslagern der Stapel von Buchdecken mit dem Herstellen der dazugehörigen Buchblöcke synchronisiert.

Die in das Stapellager 49 integrierte Steuerungs- und Kommunikationseinheit 61 kann auch dazu verwendet werden, die einzelnen Komponenten des Stapellagers 49, insbesondere das Regalbediengerät 74, zu steuern. Alternativ kann das Stapellager 49 natürlich auch eine andere Steuerungseinheit aufweisen, die das Stapellager 49 steuert.

Die Buchblöcke-Herstellungseinheit 2 umfasst insbesondere eine Druckeinrichtung 59 zum Drucken der Buchblöcke und eine Schneideeinrichtung 32 zum Zuschneiden der gedruckten Buchblöcke, nachdem diese mittels eines Förderbandes 55 von der Druckeinrichtung 59 zu der Schneideeinrichtung 32 bewegt worden sind. In einem anderen Ausführungsbeispiel werden die gedruckten Buchblöcke der Schneideeinrichtung 32 manuell und nicht mittels eines Förderbandes zugeführt. Die Steuerungs- und Kommunikationseinheit 62 kann der Druckeinrichtung 59 zugeordnet sein, so dass, nachdem Buchblöcke gedruckt worden sind, die zu einem Stapel von Buchdecken gehören, die Druckeinrichtung 59 ein Signal zu dem Stapellager 49 senden kann, wonach das Stapellager 49 mit dem Auslagern des entsprechenden Stapels von Buchdecken beginnt. Das Signal zum Auslagern des entsprechenden Stapels von Buchdecken kann somit an das Stapellager 49 gesendet werden, bevor die Buchblöcke mittels der Schneideeinrichtung 32 zugeschnitten werden.

Nachdem die Buchblöcke zugeschnitten worden sind, werden diese zusammen mit den dazugehörigen Buchdecken mittels den Förderbändern 46, 39 der Zuführeinrichtung 35 der Buchbindeeinheit 60 zugeführt. Die Zuführeinrichtung 35 ist angepasst, der Buchbindeeinheit 60 die Buchblöcke und die dazugehörigen Buchdecken in der entsprechenden Reihenfolge und insbesondere zeitgleich zuzuführen. Dazu weist die Zuführeinrichtung 35 eine Steuerungs- und Kommunikationseinheit 63 auf, die beim Eintreffen eines Buchblockes, das heißt nach Erhalt eines Buchblockes von der Schneideeinrichtung 32, ein entsprechendes Auslieferungssignal an das Regalsystem 10 übermittelt, wonach das Regalsystem 10 die dazugehörige Buchdecke auslagert, die dann mittels des Förderbandes 27 und des Förderbandes 39 der Buchbindeeinheit 60 zugeführt wird.

Das Lagersystem 5 kann angepasst sein, einen hergestellten Stapel von Buchdecken entweder in das Stapellager 49 einzulagern oder direkt zu dem Entstapler 50 zu fördern, ohne den Stapel in das Stapellager 49 einzulagern. Diese Entscheidung, ob eine Einlagerung in das Stapellager 49 erfolgen soll oder nicht, kann in Abhängigkeit von beispielsweise der jeweiligen Stapelhöhe erfolgen. Dazu kann das System eine Stapelhöhen-Bereitstellungseinheit aufweisen, die in diesem Ausführungsbeispiel durch die Steuerungs- und Kommunikationseinheit 58 der Buchdecken-Herstellungseinheit 4 gebildet wird. Beispielsweise kann die Steuerungs- und Kommunikationseinheit 61 des Stapellagers 49 so angepasst sein, dass sie einen Stapel von Buchdecken grundsätzlich nicht einlagert, wenn dieser Stapel von Buchdecken eine Stapelhöhe aufweist, die kleiner ist als ein vorgegebener Schwellwert. Wenn das Regalsystem 10 allerdings ausgelastet ist und keine weiteren Buchdecken aufnehmen kann, kann dieser Stapel dennoch in das Stapellager 49 eingelagert werden, obwohl die bereitgestellte Stapelhöhe kleiner ist als der Schwellwert. In anderen Ausführungsformen können auch andere Kriterien verwendet werden, um zu entscheiden, ob der jeweilige Stapel in das Stapellager 49 einzulagern ist oder ob er direkt zu dem Entstapler 50 geführt werden soll. Diese weiteren Kriterien können beispielsweise die Auslastung des Regalsystems als einziges Kriterium oder in Kombination mit anderen Kriterien, die Auslastung des Stapellagers, das Gewicht des jeweiligen Stapels von Buchdecken et cetera umfassen.

In einer weiteren Ausführungsform kann auch der Entstapler 50 eine Identifizierungseinheit zum Identifizieren von Buchdecken aufweisen. Insbesondere kann die jeweils oberste Buchdecke des jeweiligen Stapels identifiziert werden, wobei diese Identifizierung der obersten Buchdecke des jeweiligen Stapels auch als Identifizierung des jeweiligen Stapels aufgefasst werden kann. Eine Steuerungseinheit, die beispielsweise dem Entstapler 50 zugeordnet sein kann, kann den identifizierten Stapel mit einem erwarteten Stapel vergleichen und eine Fehlermeldung ausgeben und den Förderprozess stoppen, wenn der identifizierte Stapel nicht der erwartete Stapel ist. Informationen bezüglich des zu erwartenden Stapels kann die Kontrolleinheit beispielsweise von dem Stapellager oder einem unten näher beschriebenen Auftragsverwaltungssystem erhalten.

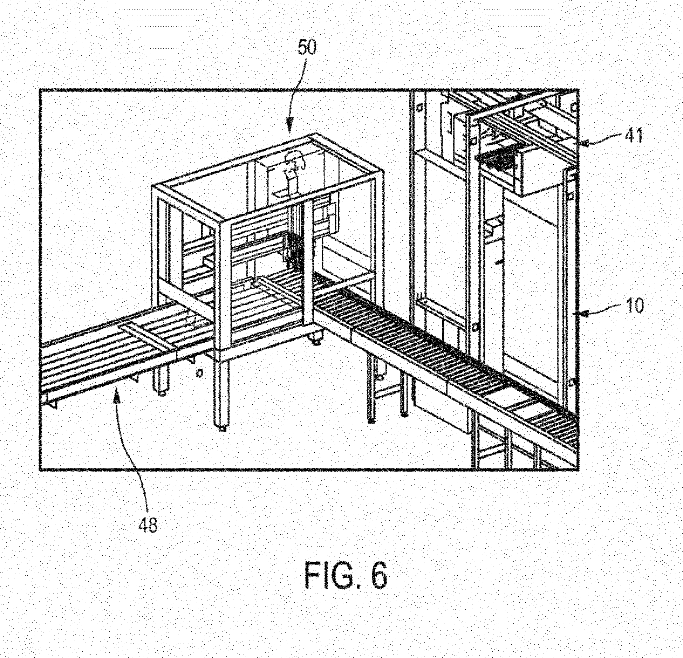

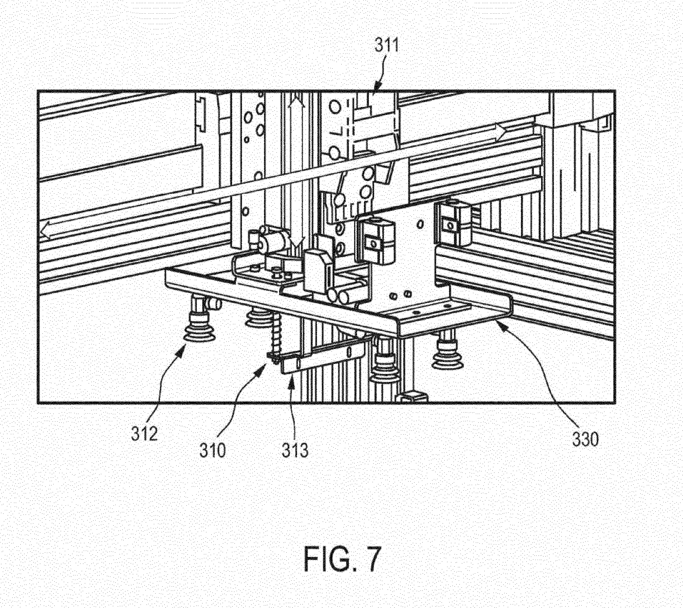

Im Folgenden wird eine Ausführungsform des Entstaplers 50 unter Bezugnahme auf die Figuren 6 bis 9 beschrieben, die Komponenten des Entstaplers 50 beispielhaft und schematisch illustrieren. Der Entstapler 50 umfasst einen Abnehmeeinheit 310 zum Abnehmen und Halten einer obersten Buchdecke 315 von einem Stapel 314 von Buchdecken und eine Bewegungseinheit 311 zum Bewegen der Abnehmeeinheit 310 mit der abgenommenen und gehaltenen Buchdecke 315 von dem Stapel 314 von Buchdecken zu einem Abgabeort. Die Abnehmeeinheit 310 umfasst Halteelemente 312 zum zeitweiligen Halten der Buchdecke 315 und ein Niederhalteelement 313 zum Niederhalten des Schrenzes der Buchdecke 315. Beim Abnehmen der obersten Buchdecke 315 wird der Schrenz der obersten Buchdecke 315 mittels des Niederhalteelements 313 niedergehalten, um die Seiten der obersten Buchdecke 315 anzuheben und von dem Stapel 314 zu lösen, wonach die Abnehmeeinheit 310 mittels der Bewegungseinheit 311 zu dem Abgabeort bewegt wird.

Auch der Entstapler 50 kann eine Identifizierungseinheit wie einen Scanner aufweisen, der den zu entstapelnden Stapel von Buchdecken identifiziert, wobei ein mit der Identifizierungseinheit verbundener Rechner eine Fehlermeldung ausgeben kann, wenn der identifizierte Stapel von Buchdecken einem erwarteten Stapel von Buchdecken, der aus dem Stapellager 49 ausgelagert werden sollte, nicht entspricht. Eine weitere Identifizierungseinheit, insbesondere ein Scanner, kann die von dem Entstapler 50 bereitgestellten vereinzelten Buchdecken identifizieren, wobei beispielsweise ein dem Entstapler 50 zugeordneter Rechner eine Fehlermeldung ausgeben kann, wenn die identifizierte Buchdecke nicht der Buchdecke entspricht, die aufgrund der Stapelzusammensetzung zu erwarten ist. Die Identifizierung durch den Entstapler 50 kann beispielsweise mittels Barcodes erfolgen, die auf den Buchdecken aufgebracht sind.

Die Zusammensetzung des Stapels von Buchdecken kann in einer Datenbank hinterlegt sein, wobei der Stapel von Buchdecken aus Buchdecken besteht, die in einer bestimmten Reihenfolge beispielsweise von der Buchdecken-Herstellungseinheit 4 aufeinandergelegt worden sind. Die Buchdecken-Herstellungseinheit 4 kann die Zusammensetzung des Stapels von Buchdecken der Datenbank mitgeteilt haben. Wenn der Stapel von Buchdecken manuell zusammengestellt worden ist, können die einzelnen Buchdecken auch manuell eingescannt worden sein, um die Reihenfolge der Buchdecken innerhalb des Stapels manuell in die Datenbank einzugeben. Die Identifizierungseinheiten des Entstaplers 50 sind bevorzugt Scanner, insbesondere Barcode-Scanner, die dazu verwendet werden, anhand eines obersten Barcodes auf dem Stapel von Buchdecken zu überprüfen, um welchen Stapel mit welchem Inhalt es sich handelt. Dabei stammt der Datensatz des Inhalts aus der Datenbank. Nach dem Entstapeln werden die vereinzelten Buchdecken ein weiteres Mal gescannt, um zu überprüfen, in welcher Reihenfolge sie den Entstapler 50 verlassen. Bei einer unerwarteten Reihenfolge, das heißt bei einer Reihenfolge, die nicht der sich aus der Datenbank ergebenden Reihenfolge entspricht, kann eine Fehlermeldung ausgegeben werden. Dadurch können nicht lesbare Buchdecken erkannt sowie "Doppel"-Ablagen vermieden werden.

Das Bandtransportsystem 48, das heißt das Förderband 48, ist bevorzugt so ausgebildet, dass der Stapel von Buchdecken mittig in den Entstapler 50 eingefahren wird. Das Förderband 48 ist bevorzugt schlupffrei ausgelegt, so dass der Stapel von Buchdecken maximal um +/- 5 mm in Bezug auf die Mittelachse verdreht ist. Damit kann eine genaue Position der verschiedenen Buchdeckengrößen beim Entstapeln sichergestellt werden.

In dieser Ausführungsform umfasst die Abnehmeeinheit 310 eine Platte 330, an der die Halteelemente 312 und das Niederhalteelement 313 angeordnet sind. Insbesondere sind vier Halteelemente 312 an Ecken eines gedachten Rechtecks angeordnet, wobei das Niederhalteelement 313 mittig zwischen jeweils zwei Halteelementen 312 angeordnet ist. Die Platte 330 ist mit der Bewegungseinheit 311 verbunden, wobei die Bewegungseinheit 311 ausgebildet, die Platte 330 und damit die Abnehmeeinheit 310 in eine horizontale x-Richtung und in eine vertikale y-Richtung zu bewegen. Die Halteelemente 312 sind bevorzugt Vakuumdüsen, die die Buchdecke ansaugen, um diese zu halten, wobei ein Sensor bevorzugt die Haltephase überwacht. Gleichzeitig drückt das Niederhalteelement 313, das federnd gelagert ist, auf den Schrenz der mittig liegenden Buchdecke. Auch das Niederhalteelement 313 wird über einen Sensor überwacht, welcher den Druck auf den Schrenz begrenzt. Um bei diesem Prozessschritt zu gewährleisten, dass lediglich eine Buchdecke von dem Stapel von Buchdecken abgehoben wird, wird die jeweils obere Buchdecke angewinkelt. Dadurch wird einem Aneinanderhaften übereinanderliegender Buchdecken, das aus der Adhäsionskraft erfolgen kann, entgegengewirkt.

Die Vakuumdüsen können beispielsweise Venturi-Düsen sein. Die Überwachung der Haltephase kann mittels eines Drucksensors erfolgen, der den bei den aufgesetzten Vakuumdüsen entstandenen Unterdruck überwacht. Eine Steuerung des Entstaplers 50 kann so ausgebildet sein, dass die Abnehmeeinheit 310 nach dem Aufsetzen auf der Buchdecke nur dann angehoben wird, wenn der Drucksensor einen ausreichenden Unterdruck misst, d.h. einen Unterdruck, der ausreichend ist, die Buchdecke nach dem Abheben zu halten. Beispielsweise kann der gemessene Unterdruck mit einem vorgegebenen Schwellwert verglichen werden, um zu entscheiden, ob der Unterdruck zum Halten der Buchdecke ausreichend ist. Wenn der gemessene Unterdruck nicht zum Halten der Buchdecke ausreichend sein sollte, kann die Steuerung die Ausgabe eines Fehlersignals veranlassen. Der Sensor zum Überwachen des Niederhalteelements 313 ist bevorzugt angepasst, beim Aufsetzen auf die Buchdecke, die durch die Feder vorgespannte Wegstrecke zu messen, wobei die Steuerung des Entstaplers 50 ab einer vorbestimmten Wegstrecke das Aufsetzen auf die Buchdecke stoppt. Der Sensor zur Messung der durch die Feder vorgespannten Wegstrecke kann beispielsweise ein bekannter optischer oder elektromagnetischer Wegstreckensensor sein.

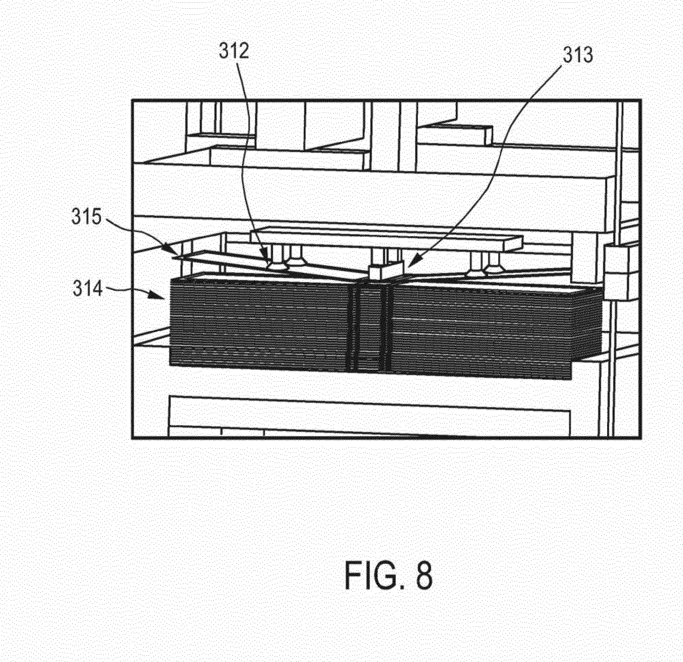

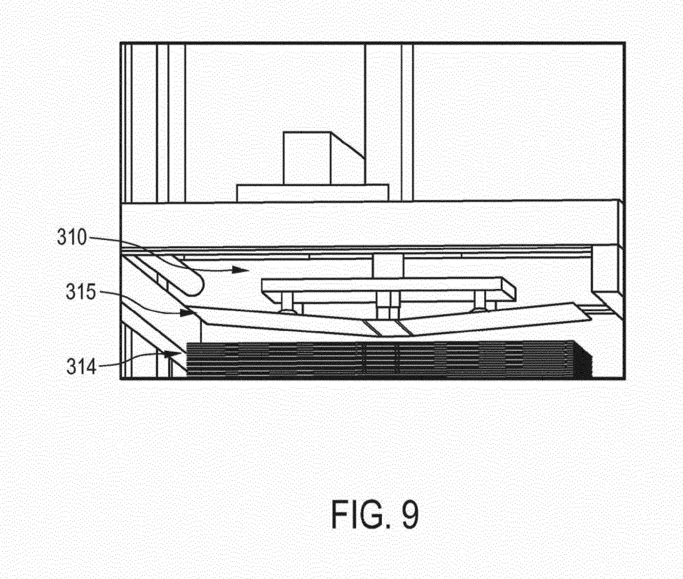

Zum Entstapeln wird demnach ein Stapel von Buchdecken von dem Förderband 48 nach dem Scannen durch den Entstapler 50 unter die Abnehmeeinheit 310 des Entstaplers 50 bewegt. Die Bewegungseinheit 311, die die Abnehmeeinheit motorisch in x- und y-Richtung bewegen kann, bewegt die Abnehmeeinheit 310 dann in y-Richtung derart nach unten, dass das Niederhalteelement 313 auf den Schrenz der obersten Buchdecke 315 einfedert. Zudem werden die Vakuumdüsen 312 so gesteuert, dass sie sich auf der obersten Buchdecke 315 festsaugen. Wie in Fig. 8 dargestellt, wird dann die oberste Buchdecke 315 angewinkelt, wodurch die oberste Buchdecke 315, das heißt die Seiten der obersten Buchdecke 315, von dem Stapel 314 getrennt werden. Während dieser Seiten-Trenn-Operation befindet sich die Position des Niederhalteelements 313 unterhalb der Position der Vakuumdüsen 312. Diese Positionierung des Niederhalteelements 313 unterhalb der Position der Vakuumdüsen 312 erfolgt bevorzugt passiv aufgrund der Federwirkung des Niederhalteelements 313, wobei zunächst die Platte 330 nur etwas nach oben bewegt wird, so dass der Schrenz der obersten Buchdecke 315 im Wesentlichen auf dem Stapel verbleibt und lediglich die Seiten der obersten Buchdecke 315 leicht angehoben werden, wonach dann in einem zweiten Schritt die oberste Buchdecke 315 einschließlich des Schrenzes vollständig angehoben wird. Dies ist in der Fig. 9 dargestellt, die zeigt, dass die Bewegungseinheit 311 die Abnehmeeinheit 310, die jetzt die oberste Buchdecke 315 hält, in y-Richtung nach oben bewegt. Des Weiteren bewegt die Bewegungseinheit 311 die Abnehmeeinheit 310 horizontal in x-Richtung zu dem Förderband 47, wo die Bewegungseinheit 311 die Abnehmeeinheit 310 nach unten in y-Richtung bewegt, um die vereinzelte Buchdecke 315 auf das Förderband 47 abzusetzen, wobei der Druck der Vakuumdüsen nachlässt, um die Buchdecke 315 freizugeben.

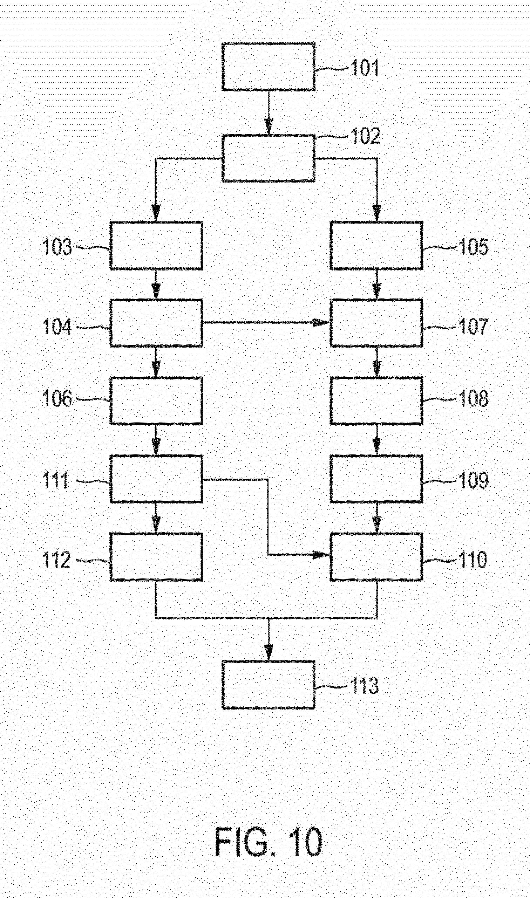

Im Folgenden wird eine Ausführungsform eines Herstellungsverfahrens zum Herstellen von Büchern, insbesondere von Fotobüchern, beispielhaft unter Bezugnahme auf ein Flussdiagramm beschrieben, das in der Fig. 10 gezeigt ist.

In Schritt 101 stellt die Buchdecken-Herstellungseinheit 4 einen Stapel von Buchdecken her. In Schritt 102 sendet die Buchdecken-Herstellungseinheit 4 ein Signal zu der Druckeinrichtung 59, wonach die Druckeinrichtung 59 in dem Schritt 103 die zu dem hergestellten Stapel von Buchdecken gehörigen Buchblöcke druckt. Zudem sendet die Buchdecken-Herstellungseinheit 4 in Schritt 102 ein Signal zu dem Stapellager 49, um dem Stapellager 49 mitzuteilen, dass der hergestellte Stapel von Buchdecken in das Stapellager 49 eingelagert werden sollte. In Schritt 105 wird dann der hergestellte Stapel von Buchdecken, nachdem dieser mittels der Förderbänder 54, 52, 51 zu dem Stapellager 49 gefördert worden ist, in das Stapellager 49 eingelagert. Nachdem die Buchblöcke, die zu dem eingelagerten Stapel von Buchdecken gehören, in Schritt 103 von der Druckeinrichtung 59 gedruckt worden sind, signalisiert die Druckeinrichtung 59 dem Stapellager 49 in Schritt 104, dass der zu den gedruckten Buchblöcken gehörende Stapel von Buchdecken ausgelagert werden kann. Alternativ kann dem Stapellager 49 auch manuell mitgeteilt werden, dass der zu den gedruckten Buchblöcken gehörende Stapel von Buchdecken ausgelagert werden kann. Beispielsweise kann eine Person in das Stapellager 49 eingeben, dass jetzt der entsprechende Stapel von Buchdecken auszulagern ist. Die Auslagerung erfolgt dann in Schritt 107. Der ausgelagerte Stapel von Buchdecken wird dann mittels des Förderbandes 48 zu dem Entstapler 50 befördert, wobei in Schritt 108 der Stapel von Buchdecken von dem Entstapler 50 entstapelt wird. Die einzelnen Buchdecken werden dann mittels des Förderbandes 47 zu dem Regalsystem 10 bewegt. In Schritt 109 werden die vereinzelten Buchdecken in das Regalsystem 10 eingelagert.

Die Buchdecken-Herstellungseinheit 4 stellt die Buchdecken stapelweise her. Hierfür können der Buchdecken-Herstellungseinheit 4 von einem Auftragsverwaltungssystem herzustellende Buchdecken übermittelt werden. Beispielsweise kann das Auftragsverwaltungssystem eine Datenbank umfassen, die für jeden Auftrag insbesondere für jedes herzustellende Buch, also jede herzustellende Buchdecke und jeden herzustellenden Buchblock, einen Datensatz aufweist. Das Auftragsverwaltungssystem kann beispielsweise mehrere Aufträge zu Stapeln von Aufträgen anhand von Kriterien, wie beispielsweise dem späteren Format des Buches, zusammenfassen und der Buchdecken-Herstellungseinheit 4 zur Herstellung eines Stapels von Buchdecken die dafür nötigen Daten bereitstellen. Nachdem die Buchdecken-Herstellungseinheit 4 einen Stapel von Buchdecken hergestellt hat, kann sie dies der Buchblöcke-Herstellungseinheit 2 mitteilen. Es wird der Buchblöcke-Herstellungseinheit 2 insbesondere mitgeteilt, welcher Stapel von Buchdecken hergestellt worden ist. Mit Hilfe der Datenbank des Auftragsverwaltungssystems kann dann bestimmt werden, welche Buchblöcke zu dem hergestellten Stapel von Buchdecken gehören, wonach die Buchblöcke-Herstellungseinheit 2 diese herstellen kann.

Parallel zu dem Auslagern des Stapels von Buchdecken, dem Entstapeln und dem Einlagern der einzelnen Buchdecken in dem Regalsystem 10 werden die Buchblöcke, nachdem diese mittels des Förderbandes 55 zu der Schneideeinrichtung 32 befördert worden sind, in Schritt 106 zugeschnitten. Nach dieser Zuschneidung wird dem Regalsystem 10 in Schritt 111 mitgeteilt, in welcher Reihenfolge einzelne Buchdecken aus dem Regalsystem 10 auszulagern sind, so dass diese zu den entsprechenden zugeschnittenen Buchblöcken passen. In Schritt 110 werden dann die entsprechenden Buchdecken in der vorgegebenen Reihenfolge aus dem Regalsystem 10 ausgelagert und mittels der Förderbänder 27, 39 in der vorgegebenen Reihenfolge der Buchbindeeinheit 60 zugeführt. Parallel dazu werden in Schritt 112 die Buchblöcke in entsprechender Reihenfolge mittels des Förderbandes 46 der Buchbindeeinheit 60 zugeführt. In Schritt 113 werden dann die Bücher hergestellt, indem die Buchbindeeinheit 60 die Buchdecken mit den dazugehörigen Buchblöcken bindet.

Die Schritte 105, 107, 108, 109 und 110 können als Schritte eines Förderverfahrens zum Fördern von Buchdecken von einer Buchdecken-Herstellungseinheit zu einer Buchbindeeinheit aufgefasst werden.

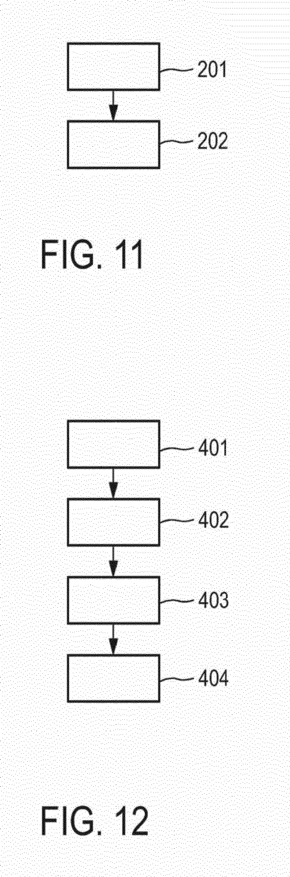

Eine Ausführungsform eines Verfahrens zum Einlagern von Buchdecken in das Regalsystem und zum Auslagern von Buchdecken aus dem Regalsystem wird im Nachfolgenden unter Bezugnahme auf ein Flussdiagramm beschrieben, das in der Fig. 11 gezeigt ist.

In Schritt 201 werden die Buchdecken in die Regaleinheit 12 des Regalsystems 10 über die Einlagerungsseite 13 der Regaleinheit 12 durch das erste Regalbediengerät 14 des Regalsystems 10 eingelagert. In Schritt 202 werden die Buchdecken aus der Regaleinheit 12 über die Auslagerungsseite 15 des Regalsystems 10 durch das zweite Regalbediengerät 16 des Regalsystems 10 ausgelagert. Die Einlagerung und die Auslagerung können nacheinander erfolgen, wie es in Fig. 11 angedeutet ist. Das Besondere bei diesem Verfahren ist allerdings, dass die Einlagerung von Buchdecken und die Auslagerung von Buchdecken auch gleichzeitig erfolgen können, da durch die Verwendung zweier Regalbediengeräte, die an gegenüberliegenden Seiten der Regaleinheit angeordnet sind, der Einlagerungsprozess und der Auslagerungsprozess voneinander entkoppelt sein können.

Eine Ausführungsform eines Verfahrens zum Einlagern von Stapeln von Buchdecken in das Stapellager 49 und zum Auslagern der Stapel von Buchdecken in das Stapellager 49 wird im Folgenden unter Bezugnahme auf ein Flussdiagramm beschrieben, das in der Fig. 12 gezeigt ist.

In Schritt 401 wird ein einzulagernder Stapel von Buchdecken in die Regaleinheit 72 des Stapellagers 49 mittels des Förderbandes 301 des Stapellagers 49 gefördert, wobei das Förderband 301 innerhalb der Regaleinheit 72 angeordnet ist, so dass sich das Förderband 301 unterhalb und oberhalb von Lagerorten der Regaleinheit 72 befindet. In Schritt 402 wird der einzulagernde Stapel von Buchdecken unter Verwendung des Lastaufnahmemittels 71 von dem Förderband 301 genommen und an einem Lagerort der Regaleinheit 72 eingelagert. In Schritt 403 wird ein auszulagernder Stapel von Buchdecken einem Lagerort der Regaleinheit 72 mittels des Lastaufnahmemittels 71 entnommen und an das Förderband 301 abgegeben, das in Schritt 404 den auszulagernden Stapel von Buchdecken in Richtung des Entstaplers 50 zu dem Förderband 48 bewegt. Diese Schritte können so ausgeführt werden, dass mehrmals nacheinander Stapel von Buchdecken eingelagert werden, bevor ein Stapel von Buchdecken ausgelagert wird. Zudem können diese Schritte so durchgeführt werden, dass mehrere Stapel von Buchdecken ausgelagert werden, bevor ein weiterer Stapel von Buchdecken eingelagert wird.

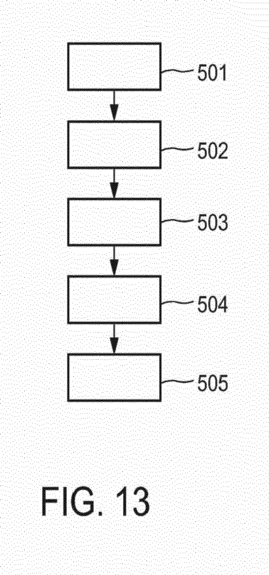

Eine Ausführungsform eines Objektaufnahmeverfahrens zum Aufnehmen und Abgeben von Objekten, insbesondere von Buchdecken und/oder von Stapeln von Buchdecken, wird im Folgenden unter Bezugnahme auf ein Flussdiagramm beschrieben, das in der Fig. 13 gezeigt ist.

In Schritt 501 wird eine Laufbandeinheit, das mehrere Transportbänder aufweist, teleskopartig aus einer Halteeinrichtung heraus bewegt, so dass die Transportbänder ein aufzunehmendes Objekt berühren. In Schritt 502 werden die Transportbänder bewegt, so dass das Objekt auf die Laufbandeinheit bewegt wird. In Schritt 503 wird dann die Laufbandeinheit wieder in die Halteeinrichtung zurück bewegt, wonach sich das Objekt auf der Laufbandeinheit innerhalb der Halteeinrichtung befindet. Die Halteeinrichtung kann dann in Schritt 504 zu einem anderen Ort bewegt werden, an dem in Schritt 505 das Objekt wieder abgegeben werden kann. Zum Abgeben des Objekts kann entweder die Laufbandeinheit wieder teleskopartig aus der Halteeinrichtung heraus bewegt werden, wonach das Objekt durch bewegen der Transportbänder von der Laufbandeinheit herunter bewegt werden kann, oder, ohne die Laufbandeinheit aus der Halteeinrichtung herauszubewegen, kann das Objekt mittels einer Bewegung der Transportbänder von der Laufbandeinheit herunter bewegt werden. Das teleskopartige Heraus- und Hineinbewegen der Laufbandeinheit aus und in die Halteeinrichtung kann nur beim Aufnehmen des Objektes, nur beim Abgeben des Objektes oder sowohl beim Aufnehmen als auch beim Abgeben des Objektes erfolgen.

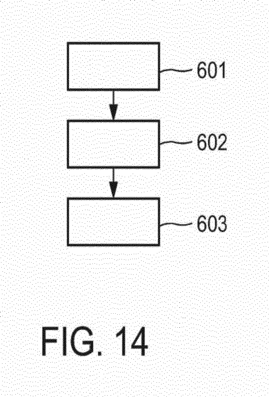

Eine Ausführungsform eines Verfahrens zum Entstapeln eines Stapels von Buchdecken und zum Abgeben einzelner Buchdecken mittels des Entstaplers 50 wird im Folgenden unter Bezugnahme auf ein Flussdiagramm beschrieben, das in der Fig. 14 gezeigt ist.

In Schritt 601 wird eine oberste Buchdecke 315 von einem Stapel 314 von Buchdecken mittels der Abnehmeeinheit 310 des Entstaplers 50 entnommen. Die Bewegungseinheit 311 bewegt dann in Schritt 602 die Abnehmeeinheit 310 mit der abgenommenen und gehaltenen Buchdecke 315 von dem Stapel 314 zu einem Abgabeort, wo die Abnehmeeinheit 310 die Buchdecke 315 in Schritt 603 abgibt.

Die Identifizierungselemente auf den Buchdecken, das heißt beispielsweise Barcodes auf den Buchdecken, sind bevorzugt in einem Randbereich der jeweiligen Buchdecke angeordnet. Zudem ist das Regalsystem 10 bevorzugt so ausgebildet, dass dieser Randbereich mit dem Identifizierungselement der Auslagerungsseite 15 der Regaleinheit 12 zugewandt ist. Hierdurch kann erreicht werden, dass sich das jeweilige Identifizierungselement relativ zu der Regaleinheit 12 in einem vordefinierten Bereich befindet, der von der Auslagerungsseite des Regalsystems 10 einsehbar ist. Dadurch kann ein Identifizieren der jeweiligen Buchdecke beim Auslagern der jeweiligen Buchdecke durch das zweite Regalbediengerät, das heißt durch eine Identifizierungseinheit, die auf dem zweiten Regalbediengerät angeordnet ist, erleichtert werden.

Die Buchdecken-Herstellungseinheit 4 ist bevorzugt so angepasst, dass jede Buchdecke in dem jeweiligen Stapel von Buchdecken derart orientiert ist, dass die einzelnen Buchdecken innerhalb der Regaleinheit 12 schließlich so angeordnet sind, dass das Identifizierungselement auf der jeweiligen Buchdecke eine gewünschte Orientierung relativ zu der Regaleinheit 12 aufweist. Bevorzugt orientiert die Buchdecken-Herstellungseinheit 4 die jeweilige Buchdecke innerhalb des jeweiligen Stapels von Buchdecken so, dass das Identifizierungselement nach oben gerichtet ist und der Auslagerungsseite des Regalsystems 10 zugeordnet ist, wenn die jeweilige Buchdecke in der Regaleinheit 12 lagert.

Das Regalsystem 10 ist bevorzugt so ausgebildet, dass Buchdecken unterschiedlicher Breite und unterschiedlicher Länge aufgenommen, eingelagert und ausgelagert werden können. Beispielsweise kann das Regalsystem 10 angepasst sein, Buchdecken einzulagern und auszulagern, die eine minimale Buchdeckenbreite von 420 mm und eine maximale Buchdeckenbreite 660 mm aufweisen. Das Regalsystem kann beispielsweise ausgebildet sein, eine maximale Anzahl an Buchdecken gleichzeitig zu lagern, die in einem Bereich von 300 bis 600 liegt. In einer Ausführungsform können beispielsweise 400 Buchdecken gleichzeitig in dem Regalsystem gelagert werden. Das Auslagern der Buchdecken ist, wie oben beschrieben, bedarfsangepasst, das heißt, die Buchdecken werden in der Reihenfolge ausgelagert, wie diese angefordert werden. Die Reihenfolge, in der die Buchdecken in das Regalsystem eingelagert werden, ist daher bei dem Regalsystem 10 nicht relevant. Das Regalsystem 10 kann so ausgebildet sein, dass beispielsweise 500 Einlagerungen und 500 Auslagerungen pro Stunde erfolgen können. Auch höhere Leistungen können natürlich erzielt werden. Beispielsweise kann das Regalsystem so ausgebildet sein, dass 600 Buchdecken pro Stunde eingelagert und ausgelagert werden können.

Das Regalsystem 10 kann so angepasst sein, dass die Einlagerung dynamisch bzw. chaotisch erfolgt. Zudem kann das Regalsystem 10 so angepasst sein, dass die jeweilige Buchdecke bezogen auf die Ausgangsposition des ersten Regalbediengeräts immer an dem nächstgelegenen freien Lagerort eingelagert wird. Die Ausgangsposition des ersten Regalbediengeräts, das heißt die Eingabeöffnung des Regalsystems 10, kann a) horizontal zentriert, b) vertikal zentriert oder c) horizontal und vertikal zentriert bezüglich der Lagerorte in der Regaleinheit des Regalsystems angeordnet sein. Auch die Ausgangsposition des zweiten Regalbediengeräts, das heißt die Ausgabeöffnung des Regalsystems 10, kann a) horizontal zentriert, b) vertikal zentriert oder c) horizontal und vertikal zentriert bezüglich der Lagerorte der Regaleinheit des Regalsystems angeordnet sein. In einer Ausführungsform kann die Einlagerung und Auslagerung derart durchgeführt werden, dass je Einlagerungsvorgang bzw. je Auslagerungsvorgang die Bewegung des jeweiligen Lastaufnahmemittels in horizontaler Richtung durchschnittlich kleiner ist als 1,3 m und in vertikaler Richtung durchschnittlich kleiner ist als 0,9 m. Zudem kann das Regalsystem 10 so ausgebildet sein, dass die Einlagerung bzw. Auslagerung einer Buchdecke im Durchschnitt in 7 Sekunden erfolgen kann.

Wenn die Identifizierungseinheit des Regalsystems ein Identifizierungselement wie beispielsweise einen Barcode einer einzulagernden bzw. auszulagernden Buchdecke nicht identifizieren kann, so wird in einer bevorzugten Ausführungsform die entsprechende Buchdecke mittels der Strecke 36 aus dem Förderweg entfernt. Das heißt beispielsweise, wenn eine eingelagerte Buchdecke nicht identifiziert werden kann, wird diese mittels des zweiten Regalbediengeräts dem Regalsystem 10 entnommen und auf die Förderstrecke 36 bewegt. Für dieses Herausnehmen einer Buchdecke aus dem Förderweg weist das Förderband 27 einen Bereich 70 auf, der beispielhaft in Fig. 1 gezeigt ist, wobei dieser Bereich sowohl in Richtung der Buchbindeeinheit 60 als auch in Richtung der Strecke 36 zum Herausnehmen der jeweiligen Buchdecke aus dem Förderweg bewegt werden kann. Die Steuerungseinheit 64 oder eine andere Steuerungseinheit kann ausgebildet sein, die Förderbänder und die Komponenten des Regalsystems derart zu steuern, dass bei einer nicht erfolgten Identifizierung einer Buchdecke, diese, wie beschrieben, aus dem Förderweg entfernt wird.

Die Buchdecken weisen bevorzugt Seitenteile und einen Schrenz auf, wobei die Seitenteile und der Schrenz bevorzugt aus Pappe, insbesondere aus Graupappe, hergestellt sind. Als Schrenz wird der Abschnitt in der Mitte der Buchdecke bezeichnet, der zur Verklebung mit dem Rücken des Buchblockes vorgesehen ist. Der Schrenz weist daher eine Breite auf, die von der Dicke des dazugehörigen Buchblockes abhängt.

Die Seitenteile und der Schrenz weisen beispielsweise eine Stärke innerhalb eines Bereichs von 1,5 bis 3 mm auf. Zudem weisen die Buchdecken jeweils einen Umschlag auf, der mit den Seitenteilen und dem Schrenz verbunden ist. Die Buchdecken-Herstellungseinheit 4 produziert bevorzugt formatreine Stapel von Buchdecken, die beispielsweise eine Höhe von bis zu 125 mm haben, wobei dies einer Anzahl von Buchdecken in einem Bereich von 1 bis 42 entsprechen kann. Die Stapel von Buchdecken können natürlich auch mehr Buchdecken umfassen und eine größere Höhe haben.

Das Regalsystem 10 kann angepasst sein, in Antwort auf eine Auslagerungsanfrage, die beispielsweise nach dem Zuschneiden der Buchblöcke erhalten wird, eine Erfolgsmeldung an die Schneideeinrichtung 32 abzugeben. Nachdem die Schneideeinrichtung 32 diese Erfolgsmeldung erhalten hat, das heißt die Information, dass die dazugehörigen Buchdecken im Regalsystem eingelagert sind und ausgelagert werden, kann die Schneideeinrichtung 32 die entsprechenden Buchblöcke an die Zuführeinrichtung 35 abgeben. Wenn allerdings eine auszulagernde Buchdecke nicht in dem Regalsystem 10 gefunden werden kann, so kann eine entsprechende Fehlermeldung an die Schneideeinrichtung 32 übertragen werden. In Antwort auf diese Fehlermeldung kann der dazugehörige Buchblock dann von der Schneideeinrichtung 32 an eine Ausführstrecke abgegeben werden, um zu verhindern, dass ein Buchblock in die Buchbindeeinheit 60 gelangt, zu dem keine dazugehörige Buchdecke vorhanden ist. Das System kann auch angepasst sein, es einem Benutzer zu ermöglichen, über die Ausführstrecke einen Buchblock zuzuführen.

Dazu kann das System eine Identifizierungseinheit zum Identifizieren des Buchblockes und eine Speichereinheit aufweisen, in der gespeichert ist, welcher Buchblock zu welcher Buchdecke gehört. Auf Basis dieser Informationen kann dann ein Auslagerungssignal zu dem Regalsystem gesendet werden, wonach die dazugehörige Buchdecke ausgelagert und der Buchbindeeinheit 60 zugeführt werden kann.

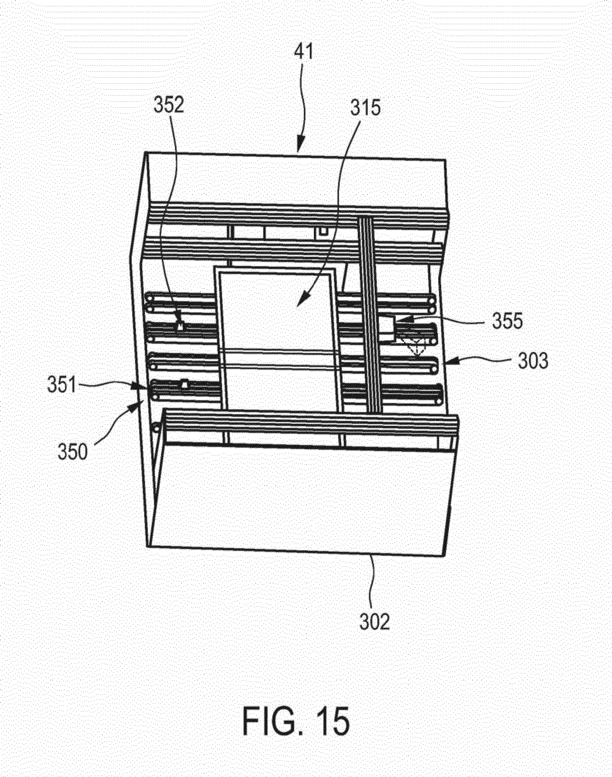

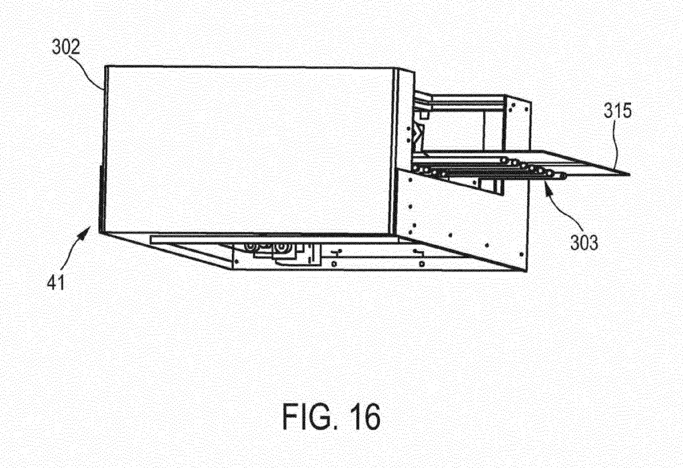

Die Figuren 15 und 16 zeigen schematisch und beispielhaft eine Ausführungsform des Lastaufnahmemittels 41 des Regalsystems 10 zum zwischenzeitlichen Lagern einzelner Buchdecken. Das Lastaufnahmemittel 41 kann sowohl von dem ersten Regalbediengerät 14 zum Einlagern einer einzelnen Buchdecke über die Einlagerungsseite 13 als auch von dem zweiten Regalbediengerät zum Auslagern einer einzelnen Buchdecke über die Auslagerungsseite 15 verwendet. Das heißt, das erste Regalbediengerät 14 und das zweite Regalbediengerät können jeweils ein Lastaufnahmemittel 41 aufweisen, um einzelne Buchdecken einzulagern beziehungsweise auszulagern.

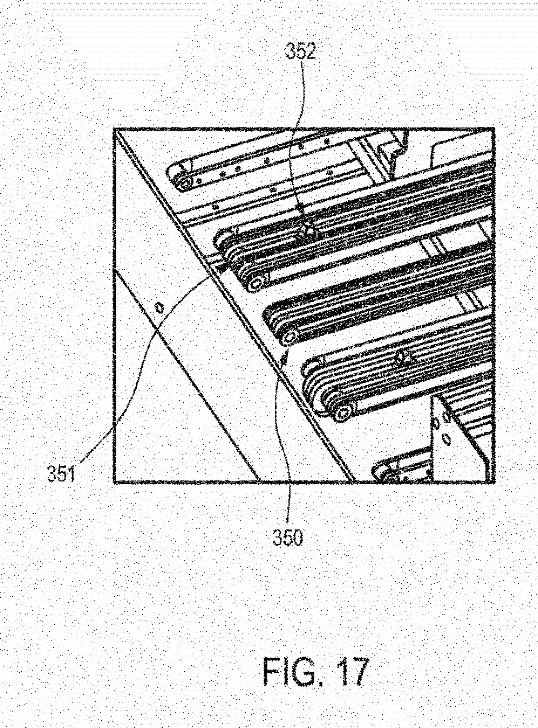

Das Lastaufnahmemittel 41 umfasst eine Halteeinrichtung 302 zum Halten einer Laufbandeinheit 303, wobei die Laufbandeinheit 303 zum Aufnehmen und/oder Abgeben einer einzelnen Buchdecke 315 aus der Halteeinrichtung 302 heraus und in die Halteeinrichtung 302 hinein bewegbar ist. Das Lastaufnahmemittel 41 weist einen entsprechenden Schlitten und einen Motor zum Heraus- und Hineinbewegen der Laufbandeinheit 303 auf. Wie in Fig. 17 dargestellt, umfasst die Laufbandeinheit 303 Transportlaufbänder 350 und Ausrichtungslaufbänder 351 mit vorstehenden Nasen 352 zum Ausrichten der einzelnen Buchdecke 315 auf den Transportlaufbändern 350, wobei die Transportlaufbänder 350 und die Ausrichtungslaufbänder 351 unabhängig voneinander bewegbar sind. Die vorstehenden Nasen 352 können nicht nur verwendet werden, die jeweilige einzelne Buchdecke auf der Laufbandeinheit 303 auszurichten, sondern auch um die einzelne Buchdecke von den Transportlaufbändern 350 herunter zu schieben.

Das Lastaufnahmemittel 41 ist angepasst, die Laufbandeinheit 303, die auch als Teleskop-Laufbandeinheit aufgefasst werden kann, auf die jeweils benötigte Länge in die Regaleinheit 12 zu fahren sowie an das jeweilige Förderband heranzufahren. Das Lastaufnahmemittel 41 selbst ist dann in horizontaler und vertikaler Richtung mittels der Bewegungseinheit des jeweiligen Regalbediengeräts bewegbar, um das Lastaufnahmemittel zu einem Lagerort innerhalb der Regaleinheit 12 beziehungsweise zu dem jeweiligen Förderband zu bewegen.

Die von dem Entstapler 50 kommenden einzelnen Buchdecken 315 werden an Lagerorten in der Regaleinheit 12 eingelagert. Grundsätzlich ist die Art und Weise des Einlagerns in das Regalsystem 10 von dem Aufbau und der Funktionsweise her mit dem Einlagern in das Stapellager 49 vergleichbar. Ein grundlegender Unterschied besteht aber in der Anordnung der Regaleinheiten. Bei dem Regalsystem 10 ist die Regaleinheit 12 mittig zwischen zwei Regalbediengeräten angeordnet, so dass die Regaleinheit 12 von einer Einlagerungsseite aus bestückt werden kann und von einer Auslagerungsseite aus Buchdecken entnommen werden können. Das Einlagern und das Auslagern können daher separat voneinander stattfinden. Bei dem Stapellager 49 wird dagegen die Regaleinheit 72 von derselben Seite aus bestückt und Stapel von Buchdecken werden von dieser selben Seite aus entnommen. Ein weiterer wesentlicher Unterschied besteht darin, dass bei der Regaleinheit 72 des Stapellagers 49 ein Förderband durch die Regaleinheit 72 verläuft, wohingegen bei dem Regalsystem 10 hinführende und wegführende Förderbänder seitlich von der Regaleinheit 12 an der Einlagerungsseite und an der Auslagerungsseite angeordnet sind.

Das Regalsystem 10 ist bevorzugt angepasst, die Identität der einzelnen Buchdecke an verschiedenen Stellen durch Scannen zu bestimmen. Eine entsprechende Identifizierungseinheit, das heißt ein entsprechender Sensor, kann beispielsweise angeordnet sein, auf der Einlagerungsseite vor der Aufnahme durch das Lastaufnahmemittel 41 die Identität der einzelnen Buchdecke festzustellen. Auch das Lastaufnahmemittel 41 selbst kann einen Sensor 355 aufweisen, um auf dem Lastaufnahmemittel 41 beim Einlagern und/oder beim Auslagern die Identität der Buchdecke festzustellen. Auch beim Verfahren der ausgelagerten einzelnen Buchdecke zu einem Umsetzer 400 kann mittels eines Sensors die Identität der einzelnen Buchdecke festgestellt werden. Der Umsetzer 400, der unten näher beschrieben wird, setzt die einzelne Buchdecke von dem Förderband 27 auf das Förderband 39.

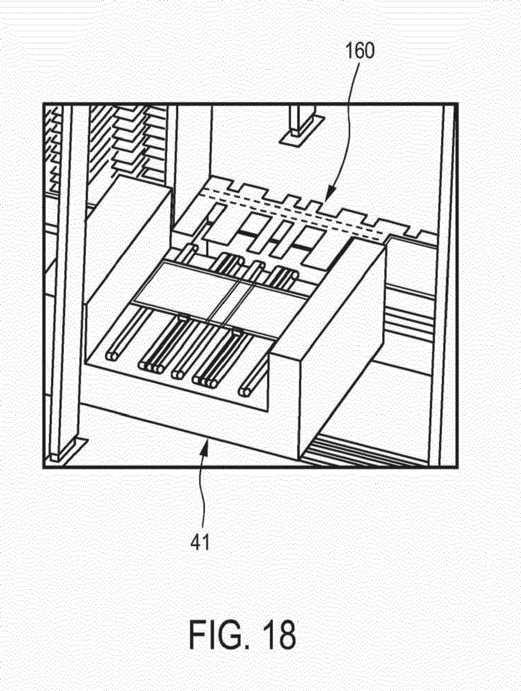

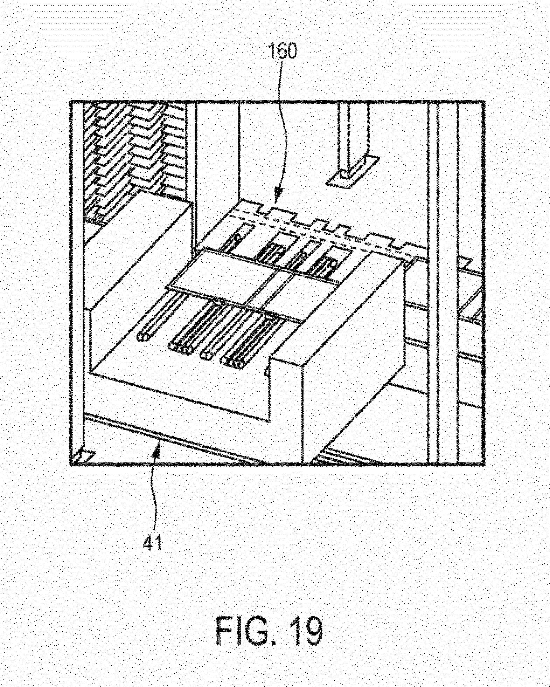

In einer Ausführungsform wird die jeweilige einzelne Buchdecke auf dem Förderband 47 gescannt, bevor sie in das Regalsystem 10 bewegt wird. Durch dieses Scannen kann festgestellt werden, welche Buchdecke in das Regalsystem 10 eingelagert werden soll. Am Ende des Förderbandes 47 kann ein Wechsel der Förderrichtung derart erfolgen, dass die gescannte Buchdecke in Richtung des Lastaufnahmemittels 41 bewegt wird, das mittels der Transportbänder 350 die Buchdecke auf die Laufbandeinheit 303 bewegt. Die Bewegungseinheit 43 bewegt das Lastaufnahmemittel 41 dann zu einem freien Lagerort in der Regaleinheit 12. Eine Positionierung des Lastaufnahmemittels 41 vor einem freien Lagerort auf einem Regalboden 160 der Regaleinheit 12 ist schematisch und beispielhaft in Fig. 18 dargestellt, wobei in dieser Figur und in Fig. 19 unter dem Regalboden mit der Zinkenstruktur ein Verstärkungselement, das unterhalb des Regalbodens angeordnet sein kann, durch gestrichelte Linien angedeutet ist. Zudem sind in diesen Figuren nicht sämtliche Regalböden dargestellt, da ansonsten die weiteren Regalböden ein Ineinandergreifen der Schienen der Laufbandeinheit 303 und der Zinken des Regalbodens 160 verdecken würden.

Die Laufbandeinheit 303 fährt dann heraus, so dass Schienen der Laufbandeinheit 303 mit den Transportlaufbändern 350 und den Ausrichtungslaufbändern 351 zwischen Zinken des Regalbodens 160 greifen. Die nachlaufenden Nasen 352 richten die Buchdecke in eine vordefinierte Position aus, wonach die Buchdecke auf den Regalboden 160 geschoben wird. Das Ineinandergreifen der Schienen des Lastaufnahmemittels 41 und der Zinken des Regalbodens 160 ist schematisch und beispielhaft in der Fig. 19 dargestellt. Nach dem Absetzen der Buchdecke auf den Zinken des Regalbodens 160 wird die Laufbandeinheit 303 wieder zurück in die Halteeinrichtung 302 bewegt. Durch diesen Vorgang, insbesondere durch die Positionierung unter Verwendung der Nasen 352, kann die Buchdecke auf dem Regalboden 160 mit einer Genauigkeit von 1 mm positioniert werden, wobei die Nasen 352 eine rechtwinklige Ausrichtung gewährleisten.

In einer Ausführungsform kann zum Einlagern einer Buchdecke die Laufbandeinheit 303, nachdem sie so herausgefahren worden ist, das Schienen der Laufbandeinheit 303 mit den Transportlaufbändern 350 und den Ausrichtungslaufbändern 351 zwischen Zinken des Regalbodens 160 greifen, so angeordnet sein, dass sich die einzulagernde Buchdecke oberhalb der Zinken des Regalbodens 160 befindet, so dass die Buchdecke die Zinken nicht berührt. Mittels der Transportlaufbänder 350 und der Ausrichtungslaufbänder 351 kann dann die Buchdecke zu einer gewünschten Position bewegt werden, wonach das gesamte Lastaufnahmemittel 41 mit der herausgefahrenen Laufbandeinheit 303 nach unten bewegt werden kann, um die positionierte Buchdecke auf den Zinken des Regalbodens 160 abzulegen. Auch in dieser Ausführungsform werden die Buchdecken bevorzugt so eingelagert, dass sie an der der Einlagerungsseite gegenüberliegenden Seite der Regaleinheit bündig zueinander angeordnet sind.

Zum Auslagern einer Buchdecke aus der Regaleinheit 12 führt das zweite Regalbediengerät bevorzugt im Wesentlichen die gleichen Schritte aus, allerdings in umgekehrter Reihenfolge, die von dem ersten Regalbediengerät beim Einlagern einer Buchdecke durchgeführt werden. Insbesondere wird das Lastaufnahmemittel des zweiten Regalbediengerätes zu einem Lagerort bewegt, an dem sich eine auszulagernde Buchdecke befindet. Vor der Übernahme der Buchdecke auf das Lastaufnahmemittel wird die Buchdecke mit einem Sensor gescannt. Der Sensor kann in dieser Ausführungsform an einer Stange angeordnet, die quer zu den Laufbändern der Laufbandeinheit des Lastaufnahmemittels und oberhalb dieser verläuft. Die Stange kann in dieser Ausführungsform an gegenüberliegenden Schenkeln der Halteeinrichtung des Lastaufnahmemittels angebracht (so wie es auch in Fig. 15 angedeutet ist). Durch diese Scanoperation, mit der insbesondere ein Barcode oder ein anderes Identifizierungselement der Buchdecke gescannt wird, kann festgestellt werden, welche Buchdecke an dem Lagerort angeordnet ist, vor dem sich das Lastaufnahmemittel aktuell befindet. Die Laufbandeinheit des Lastaufnahmemittels wird dann bis auf die Höhe der Zinken des Regalbodens so weit ausgefahren, dass sich die Schienen der Laufbandeinheit mit den Transportlaufbändern unterhalb des Endes der Buchdecke befinden, das der Auslagerungsseite zugewandt ist. Das gesamte Lastaufnahmemittel wird dann mittels der Bewegungseinheit des zweiten Regalbediengeräts so angehoben, dass die Laufbänder der Laufbandeinheit die Buchdecke berühren und die Buchdecke etwas angehoben wird. Die Transportlaufbänder der Laufbandeinheit bewegen dann die Buchdecke von dem Lagerort auf die ausgefahrene Laufbandeinheit des Lastaufnahmemittels, wonach die Laufbandeinheit wieder zurück in die Halteeinrichtung des Lastaufnahmemittels bewegt wird. Das Lastaufnahmemittel wird dann mittels der Bewegungseinheit des zweiten Regalbediengerätes zum Förderband 70 bewegt, wo die Laufbandeinheit des Lastaufnahmemittels die Buchdecke auf das Förderband 70 schiebt. Die Buchdecke wird dann schließlich mittels des Förderbandes 27 zu dem Umsetzer 400 bewegt.

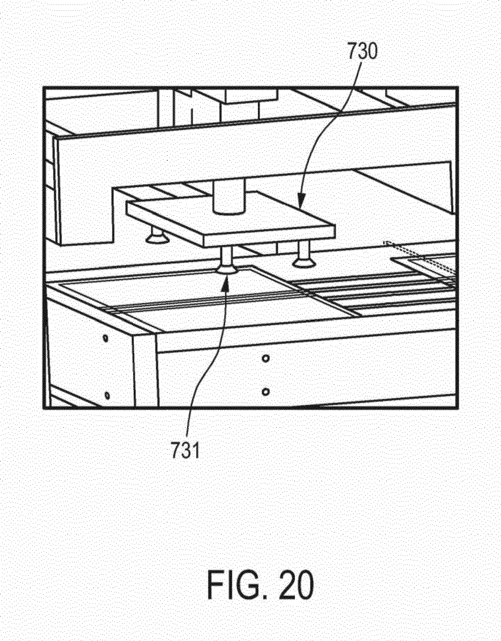

In einer Ausführungsform umfasst der Umsetzer 400 eine Platte 730 mit Halteelementen 731, die schematisch und beispielhaft etwas näher in Fig. 20 dargestellt sind und die den Halteelementen und der Platte des Entstaplers entsprechen. Insbesondere sind auch bei dem Umsetzer 400 vier Vakuumdüsen 731 an der Platte 730 angebracht, um eine Buchdecke, die umgesetzt werden soll, zu halten. Im Gegensatz zu dem Entstapler 50 wird aber bevorzugt kein Niederhalteelement verwendet, da bei dem Umsetzer 400 keine Trennung einer obersten Buchdecke von einem Stapel von Buchdecken erfolgen muss. Die dem Umsetzer 400 zugeführten Buchdecken sind bereits vereinzelt.

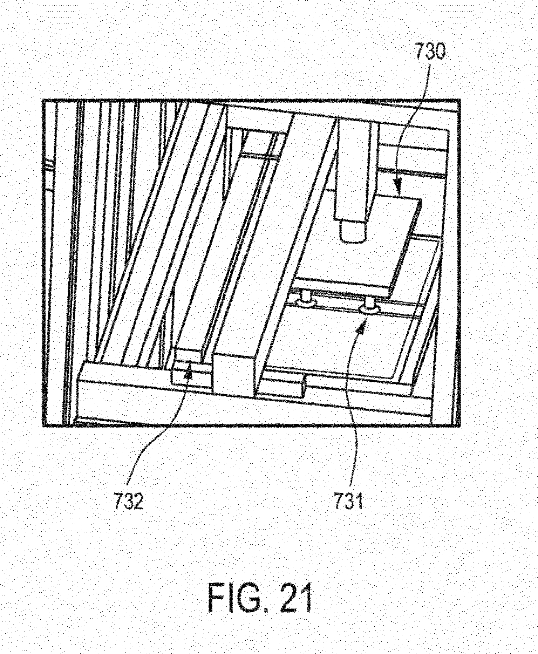

Ähnlich wie der Entstapler 50 weist auch der Umsetzer 400 eine Bewegungseinheit auf, die die Platte 730 in horizontaler Richtung und in vertikaler Richtung, das heißt in zwei Richtungen, bewegen kann. Der Umsetzer 400 umfasst des Weiteren bevorzugt Bürsten, die die von dem Regalsystem 10 kommende Buchdecke schonend zu einer Kante 732 schieben, so dass die Buchdecke innerhalb des Umsetzers 400 eine vordefinierte Ausrichtung aufweist. Diese Positionierung an der Kante 732 ist schematisch und beispielhaft in der Fig. 21 angedeutet. Die Bewegungseinheit des Umsetzers 400 bewegt dann die Platte 730 mit den Halteelementen 731 vertikal nach unten, so dass die Buchdecke mittels der Halteelemente 731 aufgenommen werden kann. Die Buchdecke wird dann angehoben, indem die Bewegungseinheit des Umsetzers 400 in vertikaler Richtung nach oben bewegt wird, wonach die Bewegungseinheit in horizontaler Richtung so bewegt wird, dass sich die Buchdecke oberhalb des Förderbandes 39 befindet. Dort wird die Platte 730 mit den Haltelementen 731 in vertikaler Richtung mittels der Bewegungseinheit nach unten bewegt und die Haltelemente 731 geben die Buchdecke frei, so dass die Buchdecke auf dem Förderband 39 abgelegt wird. Bevorzugt erfolgt dieses Ablegen der Buchdecke auf das Förderband 39 in zeitlicher Abstimmung mit der Buchbindeeinheit 60, so dass die Buchdecke nur dann der Buchbindeeinheit 60 zugeführt wird, wenn die Buchbindeeinheit 60 diese wirklich benötigt. Die zeitliche Abstimmung mit der Buchbindeeinheit 60 berücksichtigt insbesondere, ob ein ausreichender Abstand zu einer vorhergehenden Buchdecke vorhanden ist. Nach dem Ablegen der Buchdecke wird die Platte 730 mit den Halteelementen 731 wieder zu der in der Fig. 21 gezeigten Anfangsposition bewegt, um eine nächste Buchdecke von dem Förderband 27 aufzunehmen.

Am Ausgang des Umsetzers 400 kann oberhalb des Förderbandes 39 und beispielsweise außerhalb eines Gehäuses des Umsetzers 400 ein Sensor vorhanden sein, um auch am Ausgang des Umsetzers 400 noch einmal zu bestimmen, welche Buchdecke der Buchbindeeinheit 60 schließlich zugeführt wird. Der Sensor kann beispielsweise mittig und oberhalb des Förderbandes 39 an einer brückenartigen Struktur angebracht sein, wobei die brückenartige Struktur das Förderband 39 überbrückt. Der Sensor kann natürlich auch an einer anderen Position angebracht sein, beispielsweise am Gehäuse des Umsetzers 400 im Ausgangsbereich des Umsetzers 400. Wenn die identifizierte Buchdecke nicht einem entsprechenden Buchblock entspricht, der der Buchbindeeinheit 60 zuzuführen ist, kann eine Fehlermeldung ausgegeben werden, wonach der Fehler beispielsweise manuell behoben werden kann.

Die Fördereinrichtung 301 innerhalb der Regaleinheit 72 des Stapellagers 49 kann einen Bereich aufweisen, in dem die Förderrichtung geändert werden kann, so dass in diesem Bereich der einzulagernde Stapel von Buchdecken senkrecht zur eigentlichen Förderrichtung, in der die Stapel in das Stapellager 49 hinein und wieder hinaus bewegt werden, auf das Lastaufnahmemittel 71 bewegt werden kann. Die Laufbänder der Laufbandeinheit des Lastaufnahmemittels 71 werden zudem bewegt, den Stapel von Buchdecken auf das Lastaufnahmemittel 71 zu ziehen. Die Bewegungseinheit des Stapellagers 49 bewegt dann das Lastaufnahmemittel 71 zu dem vorgesehenen Lagerort, wo zunächst die Laufbandeinheit, die Schienen mit Transportlaufbändern aufweist, teleskopartig vorbewegt wird, so dass die Schienen mit den Transportlaufbändern in Lücken zwischen Zinken des Regalbodens der Regaleinheit 72 des Stapellagers 49 greifen. Das gesamte Lastaufnahmemittel 71 wird dann etwas nach unten bewegt, um den Stapel von Buchdecken auf den Zinken des Regalbodens abzusetzen. Danach wird die Laufbandeinheit wieder in die Halteeinrichtung des Lastaufnahmemittels zurückbewegt, womit die Einlagerung des Stapels von Buchdecken abgeschlossen ist.

Zum Auslagern eines Stapels von Buchdecken wird das Lastaufnahmemittel 71 zu einem Lagerort des auszulagernden Stapels von Buchdecken bewegt, wonach die Schienen mit den Transportlaufbändern der Laufbandeinheit des Lastaufnahmemittels 71 teleskopartig zwischen die Zinken des Regalbodens fahren. Dann wird das Lastaufnahmemittel 71 nach oben bewegt, so dass der Stapel von Buchdecken von den Zinken des Regalbodens gehoben wird. Danach wird mittels der Transportlaufbänder der Schienen der Laufbandeinheit der Stapel von Buchdecken weiter auf die Laufbandeinheit gezogen, wonach die Laufbandeinheit wieder teleskopartig zurück in die Halteeinrichtung des Lastaufnahmemittels 71 bewegt wird. Das Lastaufnahmemittel wird dann zur Fördereinrichtung 301 bewegt und zwar zu dem Bereich der Fördereinrichtung 301, in dem die Förderrichtung geändert werden kann. Die Laufbandeinheit wird dann bis an die Fördereinrichtung 301 teleskopartig aus der Halteeinrichtung des Lastaufnahmemittels 71 vorbewegt wird, wonach die Transportlaufbänder der Laufbandeinheit den Stapel von Buchdecken auf die Fördereinrichtung 301 verfahren. Die Fördereinrichtung 301 bewegt dann den Stapel von Buchdecken in Richtung des Entstaplers 50.

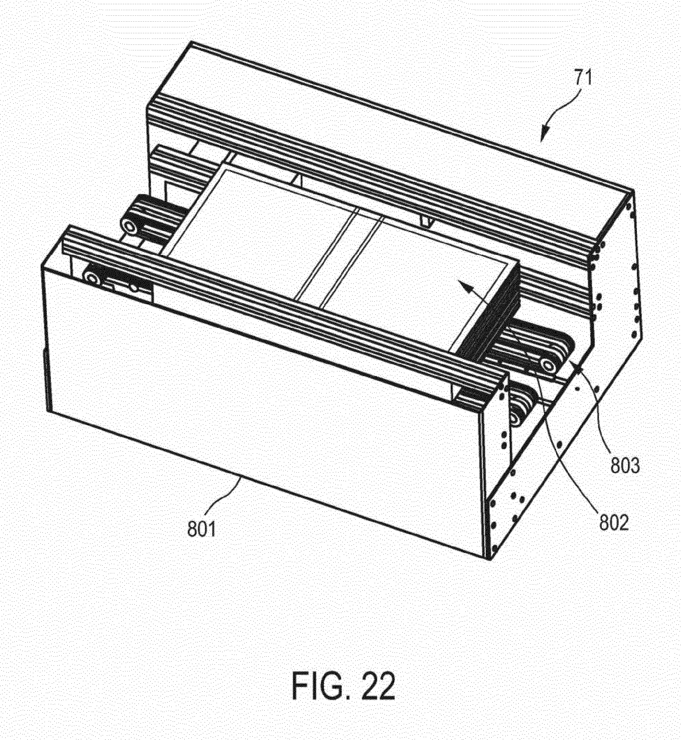

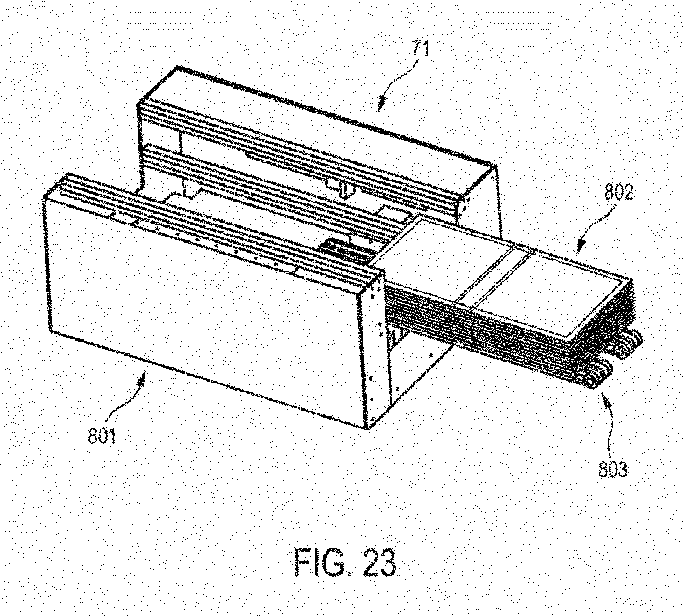

Die Figuren 22 und 23 zeigen schematisch und beispielhaft eine Ausführungsform des Lastaufnahmemittels 71 mit einem aufgenommenen Stapel 802 von Buchdecken auf der Laufbandeinheit 803. In der Fig. 22 ist die Laufbandeinheit 803 innerhalb der Halteeinrichtung 801 angeordnet, wohingegen in der Fig. 23 die Laufbandeinheit 803 teleskopartig aus der Halteeinrichtung 801 hinausbewegt worden ist. In dem Stapellager 49 wird die Position, in der die Laufbandeinheit 803 teleskopartig herausgefahren ist und die in Fig. 23 dargestellt ist, bevorzugt verwendet, um den Stapel 802 von Buchdecken an einem Lagerort innerhalb der Regaleinheit 72 abzusetzen und um ein Stapel von Buchdecken an einem Lagerort innerhalb der Regaleinheit 72 aufzunehmen. Zum Herausfahren und Hereinfahren der Laufbandeinheiten können die Lastaufnahmemittel entsprechende motorisch angetriebene Schlitten-Konstruktionen oder andere bekannte Vorrichtungen aufweisen.

Obwohl in den oben beschriebenen Ausführungsformen das Regalsystem 10 und das Stapellager 49 als Teile eines größeren Systems beschrieben worden sind, das dazu verwendet wird, Fotobücher herzustellen, können das Regalsystem 10 und das Stapellager 49 in anderen Ausführungsformen auch zum Einlagern und Auslagern anderer Objekte verwendet werden. Die anderen Objekte können beispielsweise andere flache und leichte Gegenstände wie CDs, DVDs oder andere Druckerzeugnisse sein. Das Regalsystem 10 und das Stapellager 49 können auch allein, das heißt ohne weitere Komponenten, oder zusammen mit anderen Komponenten verwendet werden. Dementsprechend können auch der Entstapler 50 und die Lastaufnahmemittel selbstständig oder zusammen mit anderen Komponenten verwendet werden, die nicht zwingend ein System zum Herstellen von Fotobüchern bilden.

Es sollte verstanden werden, dass die oben genannten Förderbänder, Fördereinrichtungen et cetera durch Bänder im eigentlichen Sinne verwirklicht werden können und/oder durch andere Förderelemente wie beispielsweise Rollen. Zum Beispiel kann ein oben genanntes Förderband Bänder im eigentlichen Sinne und Rollen aufweisen. In einer Ausführungsform wird ein Bereich eines Förderbandes, in dem die Förderrichtung verändert werden kann, durch eine Kombination von Bändern im eigentlichen Sinne und Rollen gebildet, wobei die Rollen so parallel angeordnet sind, dass sie die Objekte in eine erste Richtung bewegen können und wobei die Bänder zwischen den Rollen verlaufen und so bewegt werden, dass sie die Objekte in eine zweite Richtung bewegen können, die senkrecht ist zu der ersten Richtung. Die Rollen und die Bänder können relativ zueinander automatisch motorisch höhenverstellbar sein, so dass entweder die Rollen höher sind und das Objekt führen können oder die Bänder höher sind und das Objekt führen können. Durch Verändern der relativen Höheneinstellung kann damit die Förderrichtung um 90° verändert werden.

Obwohl in oben beschriebenen Ausführungsformen Regalbediengeräte verwendet werden, können auch andere Regalnutzungsgeräte benutzt werden, die ein Einlagern und/oder ein Auslagern von Objekten ermöglichen. Auch diese anderen Regalnutzungsgeräte können die beschriebenen Objektaufnahmeeinrichtungen aufweisen und angepasst sein, diese beispielsweise in horizontaler und vertikaler Richtung zu bewegen.

In den Ansprüchen schließen die Wörter "aufweisen" und "umfassen" nicht andere Elemente oder Schritte aus und der unbestimmte Artikel "ein" schließt die Mehrzahl nicht aus.

Eine einzelne Einheit oder Vorrichtung kann die Funktionen mehrerer Elemente ausführen, die in den Ansprüchen aufgeführt sind. Die Tatsache, dass einzelne Funktionen und/oder Elemente in unterschiedlichen abhängigen Ansprüchen aufgeführt sind, bedeutet nicht, dass nicht auch eine Kombination dieser Funktionen oder Elemente vorteilhaft verwendet werden könnte.

Die Steuerung des Herstellungssystems zum Herstellen von Büchern gemäß des Herstellungsverfahrens und/oder die Steuerung des Lagersystems zum Lagern und Fördern von Buchdecken gemäß des Förderverfahrens und/oder die Steuerung der Regalsysteme zum Lagern von Objekten gemäß der Verfahren zum Einlagern der Objekte in die Regalsysteme und zum Auslagern der Objekte aus den Regalsystemen und/oder die Steuerung des Entstaplers zum Entstapeln eines Stapels von Buchdecken und zum Abgeben einzelner Buchdecken gemäß dem Verfahren zum Entstapeln eines Stapels von Buchdecken und zum Abgeben einzelner Buchdecken und/oder die Steuerung des Lastaufnahmemittels, das auch als Objektaufnahmeeinrichtung aufgefasst werden kann, zum Aufnehmen und Abgeben von Objekten gemäß dem Objektaufnahmeverfahren zum Aufnehmen und Abgeben von Objekten können als Programmcode eines Computerprogramms und/oder als entsprechende Hardware implementiert sein und sind insbesondere speicherprogrammierbare Steuerungen.

Ein Computerprogramm kann auf einem geeigneten Medium gespeichert sein, wie beispielsweise einem optischen Speichermedium oder einem Festkörperspeichermedium. Das gespeicherte Computerprogramm kann zusammen mit oder als Teil anderer Hardware vertrieben werden. Das Computerprogramm kann aber auch in anderen Formen betrieben werden, beispielsweise über das Internet oder andere Telekommunikationssysteme.

Die Bezugszeichen in den Ansprüchen sind nicht derart zu verstehen, dass der Gegenstand und der Schutzbereich der Ansprüche durch diese Bezugszeichen eingeschränkt sind.

## Patentansprüche

1. Regalsystem (10) zum Lagern von Objekten, insbesondere von einzelnen Buchdecken, wobei das Regalsystem aufweist:
- eine Regaleinheit (12) zum Lagern mehrerer Objekte (11), wobei die Regaleinheit (12) eine Einlagerungsseite (13) und eine der Einlagerungsseite (13) gegenüberliegende Auslagerungsseite (15) aufweist,
- ein erstes Regalnutzungsgerät (14) zum Einlagern von Objekten (11) in die Regaleinheit (12) über die Einlagerungsseite (13),
- ein zweites Regalnutzungsgerät (16) zum Auslagern von Objekten (11) aus der Regaleinheit (12) über die Auslagerungsseite (15), und
- eine Steuerungs- und Kommunikationseinheit (64), (64), die angepasst ist, die ersten und zweiten Regalbediengeräte zu steuern,
wobei das Regalsystem (10) Regalböden (160) aufweist, auf denen die Objekte (11) gelagert werden und auf denen sich demnach Lagerorte befinden, wobei die Regalböden (160) auf der Auslagerungsseite keinen Anschlag aufweisen, **dadurch gekennzeichnet, dass**
wobei das erste Regalnutzungsgerät (14) angepasst ist, die Objekte (11) so in die Regaleinheit (12) einzulagern, dass die im Regalsystem (10) befindlichen Objekte (11) in Auslagerungsrichtung dieselbe Position aufweisen, selbst wenn die Objekte (11) unterschiedliche Abmessungen haben, wobei das erste Regalnutzungsgerät (14) angepasst ist, die Wegstrecke, die das jeweilige Objekt (11) in die Regaleinheit (12) bewegt wird, in Abhängigkeit von der Größe des Objektes (11) in Auslagerungsrichtung zu wählen,
und
das erste Regalnutzungsgerät (14) eine Ausgangsposition (44) bezüglich der Regaleinheit (12) aufweist und die Steuerungs- und Kommunikationseinheit (64) angepasst ist, das erste Regalnutzungsgerät (14) so zu steuern, dass Objekte (11) in der Ausgangsposition (44) aufgenommen und in die Regaleinheit (12) so an Lagerorten eingelagert werden, dass Wegstrecken von der Ausgangsposition (44) zu den Lagerorten minimiert sind, wobei das erste Regalnutzungsgerät (14) so gesteuert wird, dass die Objekte (11) mit möglichst geringem Abstand zu der Ausgangsposition (44) eingelagert werden, wobei jeweils derjenige nicht belegte Lagerort aus einer Vielzahl von nicht belegten Lagerorten ausgewählt wird, der der Ausgangsposition (44), an der das jeweilige Objekt (11) aufgenommen wird, am nächsten liegt.

2. Regalsystem (10) nach Anspruch 1, wobei das erste Regalnutzungsgerät (14) angepasst ist, Objekte (11) in der Ausgangsposition (44) aufzunehmen und in die Regaleinheit (12) so an Lagerorten einzulagern, dass Zeiten, die für die jeweilige Einlagerung benötigt werden, minimiert sind.

3. Regalsystem (10) nach einem der vorhergehenden Ansprüche, wobei die Ausgangsposition (44) bezüglich der Regaleinheit (12) zentriert angeordnet ist.

4. Regalsystem (10) nach einem der vorhergehenden Ansprüche, wobei das zweite Regalnutzungsgerät (14) eine Ausgangsposition (45) bezüglich der Regaleinheit (12) aufweist, wobei das zweite Regalnutzungsgerät (14) eingerichtet ist, Objekte (11) in der Ausgangsposition (45) abzugeben, wobei die Ausgangsposition (45) bezüglich der Regaleinheit (12) zentriert angeordnet ist.

5. Regalsystem (10) nach einem der vorstehenden Ansprüche, wobei jedes Objekt (11) ein Identifizierungselement zur eindeutigen Identifizierung des jeweiligen Objektes (11) aufweist und wobei das Regalsystem (10) mindestens eine Identifizierungseinheit (66) umfasst, die eingerichtet ist, das jeweilige Objekt (11) unter Verwendung des Identifizierungselementes zu identifizieren.

6. Regalsystem (10) nach Anspruch 5, wobei die Identifizierungseinheit (66) angepasst ist, das jeweilige Objekt (11) bei der Aufnahme durch das erste Regalnutzungsgerät (14) und/oder bei der Abgabe durch das zweite Regalnutzungsgerät (16) und/oder, wenn es in die Regaleinheit (12) eingelagert ist, zu identifizieren.

7. Regalsystem (10) nach einem der Ansprüche 1 bis 6, **dadurch gekennzeichnet, dass** das erste Regalnutzungsgerät (14) und/oder das zweite Regalnutzungsgerät (16) eine Objektaufnahmeeinrichtung (41) zum Aufnehmen und Abgeben von Objekten, insbesondere von Buchdecken (315) und/oder von Stapeln von Buchdecken, umfasst, wobei die Objektaufnahmeeinrichtung (41) eine Laufbandeinheit (303) und eine Halteeinrichtung (302) zum Halten der Laufbandeinheit (303) aufweist, wobei die Objektaufnahmeeinrichtung (41) so angepasst ist, dass die Laufbandeinheit (303) zum Aufnehmen und/oder Abgeben eines Objekts (315) aus der Halteeinrichtung (302) heraus- und in die Halteeinrichtung (302) hineinbewegbar ist.

8. Regalsystem (10) nach Anspruch 7, **dadurch gekennzeichnet, dass** das Regalsystem angepasst ist, die Objektaufnahmeeinrichtung so zu steuern und zu bewegen, dass
- zum Abgeben des Objekts an einem Lagerort das Objekt auf der herausbewegten Laufbandeinheit zunächst oberhalb des Lagerorts angeordnet ist, wonach die Objektaufnahmeeinrichtung zur Ablage des Objekts an dem Lagerort nach unten bewegt wird, und/oder
- zum Aufnehmen des Objekts von einem Lagerort die herausbewegte Laufbandeinheit zunächst unterhalb des Lagerorts angeordnet ist, wonach die Objektaufnahmeeinrichtung zur Aufnahme des Objekts von dem Lagerort nach oben bewegt wird.

9. Lagersystem (5) zum Lagern von Buchdecken, wobei das Lagersystem (5) aufweist:
- ein Stapellager (49) zum Lagern von Stapeln von Buchdecken,
- einen Entstapler (50) zum Entstapeln der Stapel von Buchdecken und zum Abgeben einzelner Buchdecken (11),
- ein Regalsystem (10) nach einem der Ansprüche 1 bis 8 zum Lagern der einzelnen Buchdecken.

10. Herstellungssystem (1) zum Herstellen von Büchern, wobei das Herstellungssystem (1) aufweist:
- eine Buchdecken-Herstellungseinheit (4) zum Herstellen von Stapeln von Buchdecken,
- ein Lagersystem (5) nach Anspruch 9 zum Lagern von Buchdecken,
- eine Buchblöcke-Herstellungseinheit (2) zum Herstellen von Buchblöcken,
- ein Buchbindeeinheit (60) zum Herstellen von Büchern durch Binden von Buchdecken (11) mit dazugehörigen Buchblöcken, und
- eine Zuführeinrichtung (35) zum Zuführen von Buchdecken (11) von dem Regalsystem (10) des Lagersystems (5) und von Buchblöcken von der Buchblöcke-Herstellungseinheit (2) zu der Buchbindeeinheit (60).

11. Verfahren zum Einlagern von Objekten, insbesondere von einzelnen Buchdecken, in ein Regalsystem nach einem der Ansprüche 1 bis 8 und zum Auslagern der Objekte (11) aus dem Regalsystem, wobei das Verfahren aufweist:
- Einlagern von Objekten (11) in die Regaleinheit (12) des Regalsystem über die Einlagerungsseite (13) der Regaleinheit (12) des Regalsystems durch das erste Regalnutzungsgerät (14) des Regalsystems, und
- Auslagern von Objekten (11) aus der Regaleinheit (12) über die Auslagerungsseite (15) des Regalsystems durch das zweite Regalnutzungsgerät (16) des Regalsystems.

12. Förderverfahren zum Fördern von Buchdecken, wobei das Förderverfahren aufweist:
- Fördern von Stapeln von Buchdecken von einer Buchdecken-Herstellungseinheit (4) zu einem Stapellager (49),
- Einlagern der Stapel von Buchdecken in das Stapellager (49),
- Auslagern der Stapel von Buchdecken aus dem Stapellager (49),
- Fördern der Stapel von Buchdecken von dem Stapellager (49) zu einem Entstapler (50),
- Aufnehmen der Stapel von Buchdecken und Abgeben einzelner Buchdecken (11) durch den Entstapler (50),
- Fördern der einzelnen Buchdecken (11) von dem Entstapler (50) zu einem Regalsystem (10) nach einem der Ansprüche 1 bis 8,
- Einlagern der einzelnen Buchdecken (11) in das Regalsystem (10) und Auslagern der einzelnen Buchdecken (11) aus dem Regalsystem (10) gemäß dem Verfahren nach Anspruch 11, und
- Fördern der einzelnen Buchdecken (11) von dem Regalsystem (10) zu einer Zuführeinrichtung (35) zum Zuführen der einzelnen Buchdecken (11) zu einer Buchbindeeinheit (60).

13. Herstellungsverfahren zum Herstellen von Büchern, wobei das Herstellungsverfahren aufweist:
- Förderverfahren zum Fördern von Buchdecken gemäß Anspruch 12 sowie
- Herstellen von zu den einzelnen Buchdecken (11) gehörenden Buchblöcken durch eine Buchblöcke-Herstellungseinheit (2),
- Zuführen der einzelnen Buchdecken (11) und der hergestellten dazugehörigen Buchblöcke zu der Buchbindeeinheit (60), und
- Herstellen von Büchern durch Binden der Buchdecken (11) mit den dazugehörigen Buchblöcken durch die Buchbindeeinheit (60).

14. Computerprogramm zum Steuern eines Regalsystems (10) nach einem der Ansprüche 1 bis 8 zum Einlagern von Objekten, insbesondere von einzelnen Buchdecken, in das Regalsystem und zum Auslagern der Objekte aus dem Regalsystem, wobei das Computerprogramm Programmcodemittel aufweist, die angepasst sind, das Regalsystem (10) derart zu steuern, dass das Verfahren gemäß Anspruch 11 durchgeführt wird, wenn das Computerprogramm auf einem Computer ausgeführt wird, der das Regalsystem (10) steuert.

## Claims

1. Shelf system (10) for storing objects, in particular individual book covers, wherein the shelf system has:
- a shelf unit (12) for storing a plurality of objects (11), wherein the shelf unit (12) has a storage side (13) and a removal side (15) opposite the storage side (13),
- a first shelf usage device (14) for storing objects (11) in the shelf unit (12) via the storage side (13),
- a second shelf usage device (16) for removing objects (11) from the shelf unit (12) via the removal side (15), and
- a control and communication unit (64) which is adapted to control the first and second shelf operating devices,
wherein the shelf system (10) has shelf bases (160) on which the objects (11) are stored and on which storage locations are accordingly located, wherein the shelf bases (160) have no stop at the removal side, **characterised in that** the first shelf usage device (14) is adapted to store the objects (11) in the shelf unit (12) in such a manner that the objects (11) which are located in the shelf system (10) have the same position in the removal direction even when the objects (11) have different dimensions, wherein the first shelf usage device (14) is adapted to select the distance which the respective object (11) is moved in the shelf unit (12) in accordance with the size of the object (11) in the removal direction,
and
the first shelf usage device (14) has an initial position (44) with respect to the shelf unit (12) and the control and communication unit (64) is adapted to control the first shelf usage device (14) in such a manner that objects (11) are received in the initial position (44) and stored in the shelf unit (12) at storage locations in such a manner that distances from the initial position (44) to the storage locations are minimised, wherein the fist shelf usage device (14) is controlled in such a manner that the objects (11) are stored with the smallest possible spacing from the initial position (44), wherein in each case from a large number of non-occupied storage locations the non-occupied storage location which is closest to the initial position (44) at which the respective object (11) is received is selected.

2. Shelf system (10) according to claim 1, wherein the first shelf usage device (14) is adapted to receive objects (11) in the initial position (44) and to store them in the shelf unit (12) at storage locations in such a manner that times which are required for the respective storage are minimised.

3. Shelf system (10) according to any one of the preceding claims, wherein the initial position (44) is arranged in a manner centred with respect to the shelf unit (12).

4. Shelf system (10) according to any one of the preceding claims, wherein the second shelf usage device (14) has an initial position (45) with respect to the shelf unit (12), wherein the second shelf usage device (14) is configured to discharge objects (11) in the initial position (45), wherein the initial position (45) is arranged in a manner centred with respect to the shelf unit (12).

5. Shelf system (10) according to any one of the preceding claims, wherein each object (11) has an identification element for clear identification of the respective object (11) and wherein the shelf system (10) comprises at least one identification unit (66) which is configured to identify the respective object (11) using the identification element.

6. Shelf system (10) according to claim 5, wherein the identification unit (66) is adapted to identify the respective object (11) when it is received by the first shelf usage device (14) and/or when it is discharged by the second shelf usage device (16) and/or when it is stored in the shelf unit (12).

7. Shelf system (10) according to any one of claims 1 to 6, **characterised in that** the first shelf usage device (14) and/or the second shelf usage device (16) comprises an object receiving device (41) for receiving and discharging objects, in particular book covers (315) and/or stacks of book covers, wherein the object receiving device (41) has a conveyor belt unit (303) and a retention device (302) for retaining the conveyor belt unit (303), wherein the object receiving device (41) is adapted in such a manner that the conveyor belt unit (303) in order to receive and/or discharge an object (315) from the retention device (302) can be moved out of the retention device (302) and into the retention device (302).

8. Shelf system (10) according to claim 7, **characterised in that** the shelf system is adapted to control and move the object receiving device in such a manner that,
- in order to discharge the object at a storage location, the object is initially arranged on the conveyor belt unit which has been moved out initially above the storage location, after which the object receiving device is moved downwards in order to deposit the object at the storage location, and/or,
- in order to receive the object from a storage location, the conveyor belt unit which has been moved out is initially arranged below the storage location, after which the object receiving device is moved upwards in order to receive the object from the storage location.

9. Storage system (5) for storing book covers, wherein the storage system (5) has:
- a stack store (49) for storing stacks of book covers,
- an unstacking device (50) for unstacking the stacks of book covers and for discharging individual book covers (11),
- a shelf system (10) according to any one of claims 1 to 8 for storing the individual book covers.

10. Production system (1) for producing books, wherein the production system (1) has
- a book cover production unit (4) for producing stacks of book covers,
- a storage system (5) according to claim 9 for storing book covers,
- a book block production unit (2) for producing book blocks,
- a book binding unit (60) for producing books by binding book covers (11) with associated book blocks, and
- a supply device (35) for supplying book covers (11) from the shelf system (10) of the storage system (5) and book blocks from the book block production unit (2) to the book binding unit (60).

11. Method for storing objects, in particular individual book covers, in a shelf system according to any one of claims 1 to 8 and for discharging the objects (11) from the shelf system, wherein the method involves:
- storing objects (11) in the shelf unit (12) of the shelf system via the storage side (13) of the shelf unit (12) of the shelf system by the first shelf usage device (14) of the shelf system, and
- removing objects (11) from the shelf unit (12) via the removal side (15) of the shelf system by the second shelf usage device (16) of the shelf system.

12. Conveying method for conveying book covers, wherein the conveying method involves:
- conveying stacks of book covers from a book cover production unit (4) to a stack store (49),
- storing the stacks of book covers in the stack store (49),
- removing the stacks of book covers from the stack store (49),
- conveying the stacks of book covers from the stack store (49) to an unstacking device (50),
- receiving the stacks of book covers and discharging individual book covers (11) by the unstacking device (50),
- conveying the individual book covers (11) from the unstacking device (50) to a shelf system (10) according to any one of claims 1 to 8,
- storing the individual book covers (11) in the shelf system (10) and removing the individual book covers (11) from the shelf system (10) in accordance with the method according to claim 11, and
- conveying the individual book covers (11) from the shelf system (10) to a supply device (35) for supplying the individual book covers (11) to a book binding unit (60).

13. Production method for producing books, wherein the production method involves:
- conveying methods for conveying book covers according to claim 12 and
- producing book blocks which belong to the individual book covers (11) by means of a book block production unit (2),
- supplying the individual book covers (11) and the produced associated book blocks to the book binding unit (60), and
- producing books by binding the book covers (11) with the associated book blocks by the book binding unit (60).

14. Computer program for controlling a shelf system (10) according to any one of claims 1 to 8 for storing objects, in particular individual book covers, in the shelf system and for removing the objects from the shelf system, wherein the computer program has program code means which are adapted to control the shelf system (10) in such a manner that the method according to claim 11 is carried out when the computer program is carried out on a computer which controls the shelf system (10).

## Revendications

1. Système de rayonnage (10) pour le stockage d'objets, en particulier de couvertures de livre individuelles, dans lequel le système de rayonnage présente :
- une unité de rayonnage (12) pour le stockage de plusieurs objets (11), dans lequel l'unité de rayonnage (12) présente un côté d'entreposage (13) et un côté de déplacement (15) opposé au côté d'entreposage (13),
- un premier appareil d'utilisation de rayonnage (14) pour l'entreposage d'objets (11) dans l'unité de rayonnage (12) par le biais du côté d'entreposage (13),
- un second appareil d'utilisation de rayonnage (16) pour le déplacement d'objets (11) de l'unité de rayonnage (12) par le biais du côté de déplacement (15), et
- une unité de commande et de communication (64) qui est adaptée afin de commander les premier et second appareils de commande de rayonnage,
dans lequel le système de rayonnage (10) présente des fonds de rayonnage (160), sur lesquels les objets (11) sont stockés et sur lesquels se trouvent ainsi des emplacements de stockage, dans lequel les fonds de rayonnage (160) ne présentent sur le côté de déplacement aucune butée, **caractérisé en ce que**
le premier appareil d'utilisation de rayonnage (14) est adapté afin d'emmagasiner les objets (11) dans l'unité de rayonnage (12) de sorte que les objets (11) se trouvant dans le système de rayonnage (10) présentent dans le sens de déplacement la même position même si les objets (11) présentent différentes dimensions, dans lequel le premier appareil d'utilisation de rayonnage (14) est adapté afin de choisir le parcours sur lequel l'objet (11) respectif est déplacé dans l'unité de rayonnage (12), en fonction de la grandeur de l'objet (11) dans le sens de déplacement,
et
le premier appareil d'utilisation de rayonnage (14) présente une position de départ (44) par rapport à l'unité de rayonnage (12) et l'unité de commande et de communication (64) est adaptée afin de commander le premier appareil d'utilisation de rayonnage (14) de sorte que des objets (11) soient reçus dans la position de départ (44) et soient emmagasinés dans l'unité de rayonnage (12) au niveau des emplacements de stockage de sorte que des parcours de la position de départ (44) aux emplacements de stockage soient minimisés, dans lequel le premier appareil d'utilisation de rayonnage (14) est commandé de sorte que les objets (11) soient emmagasinés à une distance la plus faible possible de la position de départ (44), dans lequel respectivement l'emplacement de stockage inoccupé est sélectionné à partir d'une pluralité d'emplacements de stockage inoccupés qui est le plus proche de la position de départ (44), au niveau de laquelle l'objet respectif (11) est reçu.

2. Système de rayonnage (10) selon la revendication 1, dans lequel le premier appareil d'utilisation de rayonnage (14) est adapté afin de recevoir des objets (11) dans la position de départ (44) et d'emmagasiner dans l'unité de rayonnage (12) au niveau d'emplacements de stockage de sorte que des temps, qui sont nécessaires à l'entreposage respectif, soient minimisés.

3. Système de rayonnage (10) selon l'une quelconque des revendications précédentes, dans lequel la position de départ (44) est agencée de manière centrée par rapport à l'unité de rayonnage (12).

4. Système de rayonnage (10) selon l'une quelconque des revendications précédentes, dans lequel le second appareil d'utilisation de rayonnage (14) présente une position de départ (45) par rapport à l'unité de rayonnage (12), dans lequel le second appareil d'utilisation de rayonnage (14) est conçu afin de sortir des objets (11) dans la position de départ (45), dans lequel la position de départ (45) est agencée de manière centrée par rapport à l'unité de rayonnage (12).

5. Système de rayonnage (10) selon l'une quelconque des revendications précédentes, dans lequel chaque objet (11) présente un élément d'identification pour l'identification nette de l'objet (11) respectif et dans lequel le système de rayonnage (10) comporte au moins une unité d'identification (66) qui est conçue afin d'identifier l'objet (11) respectif en utilisant l'élément d'identification.

6. Système de rayonnage (10) selon la revendication 5, dans lequel l'unité d'identification (66) est adaptée afin d'identifier l'objet (11) respectif lors de la réception par le premier appareil d'utilisation de rayonnage (14) et/ou lors de la sortie par le second appareil d'utilisation de rayonnage (16) et/ou lorsqu'il est entreposé dans l'unité de rayonnage (12).

7. Système de rayonnage (10) selon l'une quelconque des revendications 1 à 6, **caractérisé en ce que** le premier appareil d'utilisation de rayonnage (14) et/ou le second appareil d'utilisation de rayonnage (16) comporte un dispositif de réception d'objet (41) pour la réception et la sortie d'objets, en particulier de couvertures de livre (315) et/ou pour l'empilement de couvertures de livre, dans lequel le dispositif de réception d'objet (41) présente une unité de bande de roulement (303) et un dispositif de retenue (302) pour le maintien de l'unité de bande de roulement (303), dans lequel le dispositif de réception d'objet (41) est adapté de sorte que l'unité de bande de roulement (303) soit déplacée pour la réception et/ou la sortie d'un objet (315) hors du dispositif de maintien (302) ou dans le dispositif de maintien (302).

8. Système de rayonnage (10) selon la revendication 7, **caractérisé en ce que** le système de rayonnage est adapté afin de commander et de déplacer le dispositif de réception d'objet de sorte que
- pour la sortie de l'objet au niveau d'un emplacement de stockage, l'objet soit agencé sur l'unité de bande de roulement déplacée tout d'abord au-dessus de l'emplacement de stockage, après quoi le dispositif de réception d'objet est déplacé vers le bas pour le dépôt de l'objet au niveau de l'emplacement de stockage, et/ou
- pour la réception de l'objet d'un emplacement de stockage, l'unité de bande de roulement déplacée est agencée tout d'abord en dessous de l'emplacement de stockage, après quoi le dispositif de réception d'objet est déplacé pour la réception de l'objet de l'emplacement de stockage vers le haut.

9. Système de stockage (5) pour le stockage de couvertures de livre, dans lequel le système de stockage (5) présente :
- un magasin de pile (49) pour le stockage de piles de couvertures de livre,
- un dépileur (50) pour le dépilement des piles de couvertures de livre et pour la sortie de couvertures de livre (11) individuelles,
- un système de rayonnage (10) selon l'une quelconque des revendications 1 à 8 pour le stockage des couvertures de livre individuelles.

10. Système de fabrication (1) pour la fabrication de livres, dans lequel le système de fabrication (1) présente :
- une unité de fabrication de couvertures de livre (4) pour la fabrication de piles de couvertures de livre,
- un système de stockage (5) selon la revendication 9 pour le stockage de couvertures de livre,
- une unité de fabrication de blocs de livre (2) pour la fabrication de blocs de livre,
- une unité de reliure de livre (60) pour la fabrication de livres par reliure de couvertures de livre (11) avec des blocs de livre afférents, et
- un dispositif d'alimentation (35) pour l'alimentation de couvertures de livre (11) du système de rayonnage (10) du système de stockage (5) et de blocs de livre de l'unité de fabrication de bloc de livre (2) à l'unité de reliure de livre (60).

11. Procédé d'entreposage d'objets, en particulier de couvertures de livre individuelles, dans un système de rayonnage selon l'une quelconque des revendications 1 à 8 et pour le déplacement des objets (11) du système de rayonnage, dans lequel le procédé présente :
- l'entreposage d'objets (11) dans l'unité de rayonnage (12) du système de rayonnage par le biais du côté d'entreposage (13) de l'unité de rayonnage (12) du système de rayonnage par le premier appareil d'utilisation de rayonnage (14) du système de rayonnage, et
- le déplacement d'objets (11) de l'unité de rayonnage (12) par le biais du côté de déplacement (15) du système de rayonnage par le second appareil d'utilisation de rayonnage (16) du système de rayonnage.

12. Procédé de transport pour le transport de couvertures de livre, dans lequel le procédé de transport présente :
- le transport de piles de couvertures de livre d'une unité de fabrication de couvertures de livre (4) à un magasin de pile (49),
- l'entreposage de piles de couvertures de livre dans le magasin de pile (49),
- le déplacement de piles de couvertures de livre hors du magasin de pile (49),
- le transport de piles de couvertures de livre du magasin de pile (49) à un dépileur (50),
- la réception de piles de couvertures de livre et la sortie de couvertures de livre (11) individuelles par le dépileur (50),
- le transport des couvertures de livre (11) individuelles du dépileur (50) à un système de rayonnage (10) selon l'une quelconque des revendications 1 à 8,
- l'entreposage des couvertures de livre (11) individuelles dans le système de rayonnage (10) et le déplacement des couvertures de livre (11) individuelles hors du système de rayonnage (10) selon le procédé selon la revendication 11, et
- le transport des couvertures de livre (11) individuelles du système de rayonnage (10) à un dispositif d'alimentation (35) pour l'alimentation des couvertures de livre (11) individuelles à une unité de reliure de livre (60).

13. Procédé de fabrication pour la fabrication de livres, dans lequel le procédé de fabrication présente :
- le procédé de transport pour le transport de couvertures de livre selon la revendication 12 ainsi que
- la fabrication de blocs de livre appartenant aux couvertures de livre (11) individuelles par une unité de fabrication de blocs de livre (2),
- l'alimentation des couvertures de livre (11) individuelles et des blocs de livre afférents fabriqués à l'unité de reliure de livre (60), et
- la fabrication de livres par reliure des couvertures de livre (11) avec les blocs de livre afférents par l'unité de reliure de livre (60).

14. Programme informatique pour la commande d'un système de rayonnage (10) selon l'une quelconque des revendications 1 à 8 pour l'entreposage d'objets, en particulier de couvertures de livre individuelles, dans le système de rayonnage et pour le déplacement des objets hors du système de rayonnage, dans lequel le programme informatique présente des moyens de code de programme qui sont adaptés afin de commander le système de rayonnage (10) de telle manière que le procédé selon la revendication 11 soit réalisé lorsque le programme informatique est réalisé sur un ordinateur qui commande le système de rayonnage (10).
